# EUROPEAN PATENT APPLICATION

(11) **EP 4 273 283 A1**
(43) Date of publication of application: **08.11.2023**
(21) Application number: 22762906.0
(22) Date of filing: 07.02.2022
(51) Int. Cl.: C21D 9/46, C22C 18/04, C22C 38/00, C22C 38/14, H01M 10/613, H01M 10/651, H01M 10/6556, H01M 50/20, H01M 50/24, H01M 50/249

(54) **BATTERY UNIT**

(30) Priority: 01.03.2021 JP 2021031920; 25.05.2021 JP 2021087651
(71) Applicant: NIPPON STEEL CORPORATION, Chiyoda-ku Tokyo 100-8071 (JP)
(72) Inventor: MIYAKE, Kyohei, Tokyo 100-8071 (JP); KOGA, Atsuo, Tokyo 100-8071 (JP); UEDA, Kohei, Tokyo 100-8071 (JP); MIKAZUKI, Yutaka, Tokyo 100-8071 (JP); NORITA, Katsunari, Tokyo 100-8071 (JP); MATSUI, Sho, Tokyo 100-8071 (JP); OKE, Takashi, Tokyo 100-8071 (JP)
(74) Representative: Zimmermann & Partner Patentanwälte mbB
(86) International application number: PCT/JP2022/004683
(87) International publication number: WO 2022/185849

(57) **Abstract**

This battery unit is a battery unit including a battery pack that houses a battery cell, and a water-cooling medium flow path formed outside a bottom surface of the battery pack, in which the water-cooling medium flow path is made of a Zn-based plated steel sheet, an inorganic film or a resin film is formed as a chemical conversion coating film on a surface of the Zn-based plated steel sheet, and the inorganic film contains a Si-based component or a Zr-based component as a main component.

## Description

### [Technical Field of the Invention]

The present invention relates to a battery unit.

The present application claims priority based on Japanese Patent Application No. 2021-31920 filed in Japan on March 1, 2021 and Japanese Patent Application No. 2021-87651 filed in Japan on May 25, 2021, the contents of which are incorporated herein by reference.

### [Related Art]

In the automobile field, an electric vehicle (EV) is being developed for CO₂ reduction. Among components used in EV automobiles, a battery pack that houses a battery cell serving as a power source needs to be provided with a cooling structure in order to prevent deterioration of the battery due to temperature rise. Hitherto, an air-cooling type has been the mainstream of the cooling structure, but in recent years, with an increase in a capacity of a battery, a water-cooling type having a high cooling capacity is increasingly adopted (for example, Patent Documents 1 and 2). In the water-cooling-type battery pack, a water-cooling medium flow path through which cooling water flows is formed outside the battery pack.

### [Citation List]

### [Patent Document]

[Patent Document 1]
   Japanese Unexamined Patent Application, First Publication No. 2020-107443
[Patent Document 2]
   Japanese Patent Publication No. 6125624

### [Summary of Invention]

### [Problems to be Solved by the Invention]

Here, since a long-life coolant (LLC) aqueous solution containing an organic component flows as a coolant in the water-cooling medium flow path, members constituting the water-cooling medium flow path are required to have high corrosion resistance to the coolant (coolant corrosion resistance). In addition, in a case where the cooling structure (specifically, the water-cooling medium flow path) is provided outside the battery pack, the battery pack and the cooling structure are exposed to an external environment because they are disposed on a bottom surface portion of an automobile. Therefore, members constituting the battery pack and the cooling structure are required to have corrosion resistance (external corrosion resistance) equivalent to that of a chassis of an automobile. That is, when an outer wall portion and the cooling structure of the water-cooling-type battery pack are made of iron, the iron member is required to have high coolant corrosion resistance and external corrosion resistance. However, a technique that satisfies such conditions has not been proposed so far.

Therefore, the present invention has been made in view of the above problems, and an object of the present invention is to provide a novel and improved battery unit capable of improving not only corrosion resistance to a coolant (coolant corrosion resistance) but also corrosion resistance to an external environment (external corrosion resistance).

### [Means for Solving the Problem]

In order to solve the above problems, according to an aspect of the present invention, there is provided a battery unit including a battery pack that houses a battery cell, and a water-cooling medium flow path formed outside a bottom surface of the battery pack, in which the water-cooling medium flow path is made of a Zn-based plated steel sheet, an inorganic film or a resin film is formed as a chemical conversion coating film on a surface of the Zn-based plated steel sheet, and the inorganic film contains a Si-based component or a Zr-based component as a main component.

Here, an interval between the water-cooling medium flow paths may be 40 mm or less.

In addition, the bottom surface of the battery pack may be made of an Al-based plated steel sheet or a member obtained by processing an Al sheet, and the water-cooling medium flow path may be in direct contact with the bottom surface of the battery pack.

In addition, the water-cooling medium flow path may be joined to a flow path upper lid made of an Al-based plated steel sheet or an Al sheet, and the water-cooling medium flow path may be joined to the bottom surface of the battery pack via the flow path upper lid.

In addition, an interval between the water-cooling medium flow paths may be 10 mm or more and 40 mm or less.

In addition, an interval between the water-cooling medium flow paths may be 10 mm or more and 40 mm or less, and a joint between the bottom surface of the battery pack and the water-cooling medium flow path may have a composite joint structure of a sealant and spot welding or a sealant and mechanical joining.

In addition, the inorganic film may contain at least one or more of a V component, a P component, and a Co component as a rust preventive component.

In addition, the rust preventive component may be any one or more of vanadium oxide, phosphoric acid, and Co nitrate.

In addition, the inorganic film or the resin film may have conductivity.

In addition, the inorganic film may be composed of a compound phase containing one or more of a Si-O bond, a Si-C bond, and a Si-OH bond.

In addition, a thickness of the inorganic film may be more than 0 µm and 1.5 µm or less.

In addition, the resin film may contain a resin, a rust preventive pigment, and a conductive pigment.

In addition, the resin film may contain any one or more of metal particles, intermetallic compound particles, conductive oxide particles, and conductive non-oxide ceramic particles as the conductive pigment, and the conductive pigment may have a powder resistivity of 185 × 10⁻⁶ Ωcm or less at 25°C, and may contain any one or more selected from the group consisting of Zn, Si, Zr, V, Cr, Mo, Mn, Fe, and W as a constituent element.

In addition, the resin film may contain the conductive pigment in a proportion of 1.0 mass% or more and 30 mass% or less.

In addition, an average thickness of the resin film may be 1.0 µm or more and 15 µm or less.

In addition, the Zn-based plated steel sheet may be a Zn-Al-Mg plated steel sheet, and an inorganic film containing a Si-based component as a main component may be formed on a surface of the Zn-Al-Mg plated steel sheet.

In addition, the Zn-based plated steel sheet may be a Zn-Al plated steel sheet, and a resin film may be formed on a surface of the Zn-Al plated steel sheet.

### [Effects of the Invention]

According to the above aspect of the present invention, it is possible to provide a novel and improved battery unit capable of improving not only corrosion resistance to a coolant (coolant corrosion resistance) but also corrosion resistance to an external environment (external corrosion resistance).

### [Brief Description of the Drawings]

FIG. 1 is a cross-sectional view illustrating an outline of a battery unit according to the present embodiment.
FIG. 2 is a cross-sectional view illustrating another example of the battery unit according to the present embodiment.
FIG. 3 is a cross-sectional view illustrating another example of the battery unit according to the present embodiment.
FIG. 4 is a cross-sectional view illustrating another example of the battery unit according to the present embodiment.
FIG. 5 is a cross-sectional view illustrating another example of the battery unit according to the present embodiment.

### [Embodiments of the Invention]

Hereinafter, preferred embodiments of the present invention will be described in detail with reference to the accompanying drawings. Note that a numerical range represented by "to" means a range including numerical values described before and after "to" as a lower limit value and an upper limit value. A numerical value indicated as "more than" or "less than" is not included in the numerical range.

### <1. Overall configuration of battery unit>

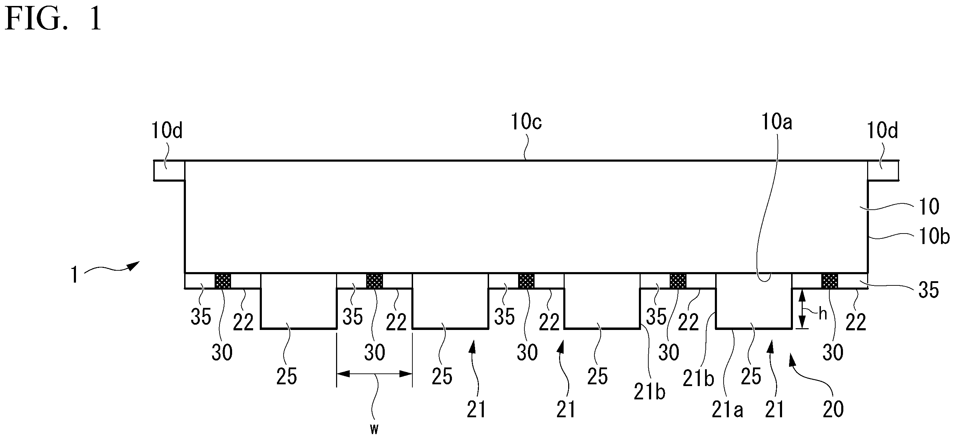

First, an overall configuration of a battery unit 1 according to the present embodiment will be described with reference to FIG. 1. FIG. 1 is a cross-sectional view (a cross-sectional view perpendicular to a bottom surface portion 10a of a battery pack 10) illustrating an outline of a battery unit 1 according to the present embodiment.

The battery unit 1 according to the present embodiment is provided outside (below) a bottom surface portion of an automobile. Therefore, the battery unit 1 is exposed to an external environment of an automobile. Therefore, the battery unit 1 is required to have corrosion resistance (external corrosion resistance) equivalent to that of a chassis of an automobile. Further, since a long-life coolant (LLC) aqueous solution containing an organic component flows as a coolant in a water-cooling medium flow path 25 of the battery unit 1, members constituting the water-cooling medium flow path 25 (a bottom surface portion 10a of a battery pack 10 and a cooling structure 20) are required to have high coolant corrosion resistance.

The battery unit 1 includes a battery pack 10 that houses a battery cell not shown, and a cooling structure 20 provided outside (below) a bottom surface portion 10a of the battery pack 10. The battery pack 10 includes a housing portion and a battery cell. The housing portion has a substantially rectangular cross section, and is divided into a bottom surface portion 10a, a side surface portion 10b, and an upper surface portion 10c. Of course, the structure of the battery pack 10 is not limited to this example.

The bottom surface portion 10a of the battery pack 10 faces the water-cooling medium flow path 25 to be described later and is in direct contact therewith. Therefore, the bottom surface portion 10a of the battery pack 10 is required to have corrosion resistance to a coolant (coolant corrosion resistance) in addition to external corrosion resistance. Therefore, in the present embodiment, the bottom surface portion 10a of the battery pack 10 is made of a Zn-based plated steel sheet. The Zn-based plated steel sheet has high external corrosion resistance and high coolant corrosion resistance. Therefore, the bottom surface portion 10a of the battery pack 10 has high external corrosion resistance and coolant corrosion resistance. Details of the Zn-based plated steel sheet will be described later.

A thickness of the Zn-based plated steel sheet constituting the bottom surface portion 10a of the battery pack 10 is not particularly limited, but is, for example, preferably 0.2 to 1.2 mm, and more preferably 0.4 to 0.6 mm. In this case, the bottom surface portion 10a can be formed thin while maintaining a strength of the bottom surface portion 10a of the battery pack 10. Therefore, since a distance between a coolant and an internal structure of the battery pack 10 can be narrowed, cooling efficiency of the battery pack 10 can be enhanced, and cooling responsiveness of the battery pack 10 can be enhanced.

Materials of the side surface portion 10b and the upper surface portion 10c of the battery pack 10 are not particularly limited, but it is preferable that these are also made of the same Zn-based plated steel sheet as that constituting the bottom surface portion 10a. In particular, since the side surface portion 10b is exposed to an external environment, it is preferable that the side surface portion 10b is made of the same Zn-based plated steel sheet as that constituting the bottom surface portion 10a. The upper surface portion 10c and the side surface portion 10b are joined via a sealant 10d. The upper surface portion 10c is fixed to a bottom surface portion of a vehicle.

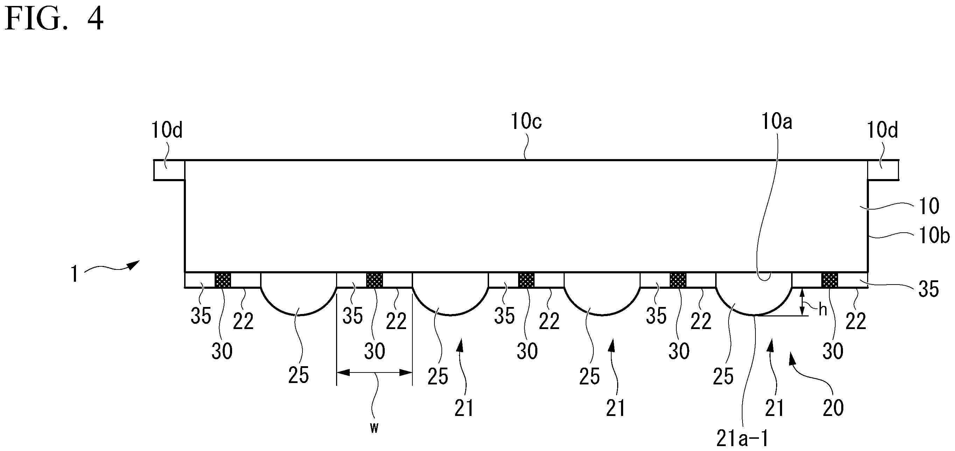

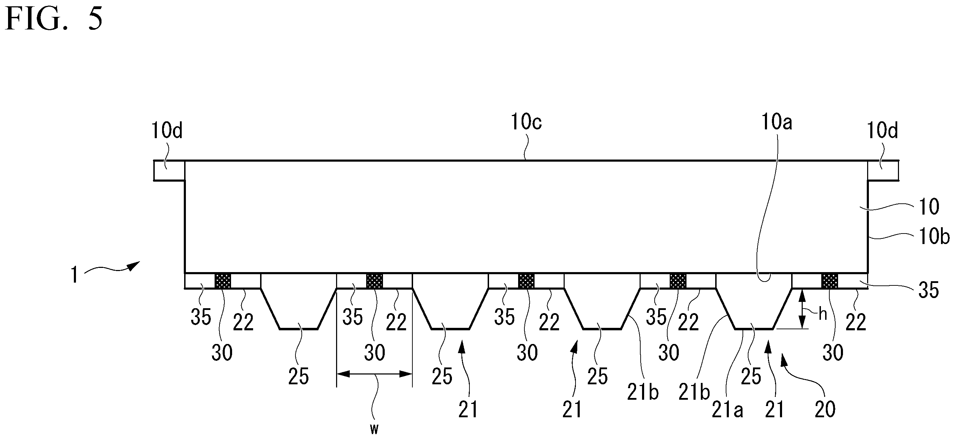

The cooling structure 20 is provided outside the bottom surface portion of the battery pack 10, and includes a plurality of flow path-forming portions 21 and a plurality of joint portions 22. The flow path-forming portion 21 has a substantially rectangular cross section, and the inside is a space. This space serves as the water-cooling medium flow path 25. The water-cooling medium flow path 25 is in direct contact with the battery pack 10. Of course, the cross-sectional shape of the flow path-forming portion 21 is not limited to this example, and may be, for example, an arc shape illustrated in FIG. 4, a trapezoidal shape illustrated in FIG. 5, or another shape. The water-cooling medium flow path 25 extends in a direction perpendicular to the paper surface of FIG. 1 (for example, a direction parallel to or perpendicular to a longitudinal direction of the bottom surface portion 10a of the battery pack 10), and is connected to a circulation path not shown. Of course, the extending direction of the water-cooling medium flow path 25 is not limited to this example, and may be curved on the bottom surface portion 10a, for example. For example, the water-cooling medium flow path 25 may have a U-shape in plan view. Then, the coolant flows through the circulation path and the water-cooling medium flow path 25. The coolant is cooled in the circulation path and then flows through the water-cooling medium flow path 25. The coolant absorbs heat of the battery pack 10 while flowing through the water-cooling medium flow path 25. Thereafter, the coolant is introduced into the circulation path again. That is, the coolant repeatedly flows through the circulation path and the water-cooling medium flow path 25 to repeatedly absorb heat of the battery pack 10.

Accordingly, the members constituting the water-cooling medium flow path 25, that is, the cooling structure 20 is required to have not only the external corrosion resistance described above but also coolant corrosion resistance. Therefore, in the present embodiment, the cooling structure 20 is made of a Zn-based plated steel sheet. The Zn-based plated steel sheet has high external corrosion resistance and high coolant corrosion resistance. For this reason, the cooling structure 20 has high external corrosion resistance and coolant corrosion resistance. Furthermore, the Zn-based plated steel sheet has a higher strength than that of an Al sheet having a similar thickness. Here, the strength of the Zn-based plated steel sheet is, for example, tensile strength, and can be measured by a tensile test in accordance with the provision of JIS Z 2241. The Al sheet has a high thermal conductivity, but by forming a thin Zn-based plated steel sheet, a thermal conductivity similar to that of the Al sheet can be realized. Therefore, in the present embodiment, since corrosion of the battery pack 10 and the cooling structure 20 by the coolant is suppressed, it is possible to suppress contamination (elution of components of the battery pack 10 or the cooling structure 20 into the coolant) that causes a decrease in thermal conductivity and clogging.

An interval between the water-cooling medium flow paths 25, in other words, a distance w between end portions in a width direction of adjacent flow path-forming portions 21 is not particularly limited, but is preferably 40 mm or less. In the example illustrated in FIG. 1, since the cross-sectional shape of the flow path-forming portion 21 is substantially rectangular, the distance w between end portions in a width direction of the flow path-forming portions 21 can be rephrased as a distance between side surface portions 21b of the flow path-forming portions 21. In the examples illustrated in FIGS. 4 and 5, a boundary portion between the flow path-forming portion 21 and the joint portion 22 is an end portion in a width direction of the flow path-forming portion 21. As a result, the width of the water-cooling medium flow path 25 can be widened, so that a contact area between the water-cooling medium flow path 25 and the bottom surface portion 10a, in other words, a contact area between the coolant and the battery pack 10 can be widened. When the Zn-based plated steel sheet according to the present embodiment is used, particularly high cooling efficiency can be obtained by setting the interval between the water-cooling medium flow paths 25 to 40 mm or less. Therefore, in the present embodiment, the cooling efficiency of the battery pack 10 can be enhanced. A lower limit value of the interval between the water-cooling medium flow paths 25 is not particularly limited, but is preferably 10 mm or more. By setting the interval between the water-cooling medium flow paths 25 to 10 mm or more, it is possible to perform joining by spot welding or mechanical joining means, and it is easy to secure joint strength.

Furthermore, a ratio of the contact area between the water-cooling medium flow path 25 and the bottom surface portion 10a to an area of the bottom surface portion 10a is preferably 0.23 or more. As a result, the contact area between the coolant and the battery pack 10 can be widened, and further the cooling efficiency of the battery pack 10 can be enhanced. An upper limit value is not particularly limited, but may be about 0.80 since it is preferable to secure a joint strength between the joint portion 22 and the bottom surface portion 10a to some extent. From the viewpoint of a balance between joint strength and cooling efficiency, the above ratio is more preferably 0.23 to 0.71. That is, cooling performance of the cooling structure 20 is improved as the above ratio is larger, but it is preferable to consider a joint strength with the battery pack 10. From such a viewpoint, the above ratio is preferably 0.23 to 0.71.

A height of the water-cooling medium flow path 25, that is, a distance h in a thickness direction of the battery unit 1 from a bottom surface portion 21a of the flow path-forming portion 21 (a lower end portion 21a-1 of the flow path-forming portion 21 in the example of FIG. 4) to the joint portion 22 adjacent to the flow path-forming portion 21 is not particularly limited, but is preferably about 0.9 to 25.0 mm from the viewpoint of the cooling efficiency of the battery pack 10. On the other hand, an upper limit of the distance h is preferably 8.0 mm from the viewpoint of processability for forming a flow path. That is, by setting the height of the water-cooling medium flow path 25 to about 0.9 to 8.0 mm, both the cooling efficiency of the battery pack 10 and the processability for forming a flow path can be achieved.

The joint portion 22 is a member for joining the cooling structure 20 to the battery pack 10, and is joined to the battery pack 10 via a spot welded portion 30. Of course, the method of joining the joint portion 22 to the battery pack 10 is not limited to this example. For example, the joint portion 22 may be bonded to the battery pack 10 by mechanical joining or a joining member such as a screw. Furthermore, as illustrated in FIG. 1, a sealant 35 may be used for protecting the joint portion and improving sealability. It is also possible to use the sealant 35 as an adhesive (that is, as an adhesive between the joint portion 22 and the battery pack 10). Here, examples of the mechanical joining means (mechanical joining) include TOX (registered trademark) manufactured by TOX (registered trademark) PRESSOTECHNIK GmbH & Co. KG. In addition, the sealant contains a resin as a main component, and is an application-type organic substance containing a resin as a main component to be applied in order to prevent intrusion of a liquid such as water (coolant in the present invention) into a gap and leakage from a gap, and is also called a sealing agent or the like. Commercially available sealants or sealing agents can be used. Furthermore, an adhesive may be used as long as it has a sealing function. Use of an adhesive is more preferable because a strength of the joint portion is increased. When a sealing agent having adhesiveness such as an adhesive is used, joint strength can be secured without performing spot welding, mechanical joining, or the like. Therefore, the sealing agent can be applied without performing spot welding or mechanical joining. In particular, depending on a type of plating of the steel sheet constituting the battery pack 10 and a type of a film on the surface, resistance during welding is large, and spot weldability is poor, so that mechanical joining is suitable. In addition, a joint structure between the battery pack 10 and the cooling structure 20 is preferably a composite joint structure of a sealant and spot welding or a sealant and mechanical joining. Accordingly, it is possible to enhance a joint strength between the battery pack 10 and the cooling structure 20 while enhancing airtightness of the water-cooling medium flow path 25. In the examples illustrated in FIGS. 1, 4, and 5, the joint structure between the battery pack 10 and the cooling structure 20 is a composite joint structure of a sealant and spot welding.

The cooling structure 20 is manufactured, for example, by processing (for example, bending, drawing, and the like) one Zn-based plated steel sheet. Therefore, the cooling structure 20 can be manufactured inexpensively and easily. That is, by forming the cooling structure 20 with the Zn-based plated steel sheet, the cooling structure 20 can be manufactured with higher productivity than when a cooling structure of a battery pack is molded by a die casting method, a casting method, or the like as in the related art. Here, a thickness of the Zn-based plated steel sheet constituting the cooling structure 20 is not particularly limited, but is, for example, preferably 0.4 to 2.0 mm, and more preferably 0.5 to 1.0 mm. In this case, it is possible to enhance processability of the cooling structure 20 (processability in manufacturing the cooling structure 20) while enhancing a strength of the cooling structure 20. Of course, the method of manufacturing the cooling structure 20 is not limited to this example. For example, the cooling structure 20 may be manufactured using a different Zn-based plated steel sheet for each of the water-cooling medium flow paths 25. In this example, the flow path-forming portion 21 corresponding to each of the water-cooling medium flow paths 25 may be formed by processing (for example, bending, drawing, and the like) each of the Zn-based plated steel sheets, and these may be joined to the battery pack 10.

As described above, in the present embodiment, the bottom surface portion 10a of the battery pack 10 and the cooling structure 20 exposed to an external environment and a coolant are made of a Zn-based plated steel sheet excellent in external corrosion resistance and coolant corrosion resistance, so that external corrosion resistance and coolant corrosion resistance of the battery unit 1 can be enhanced.

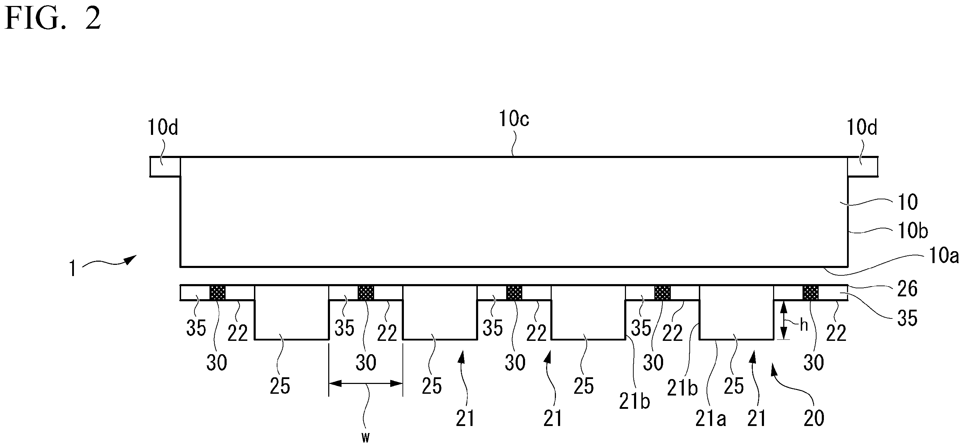

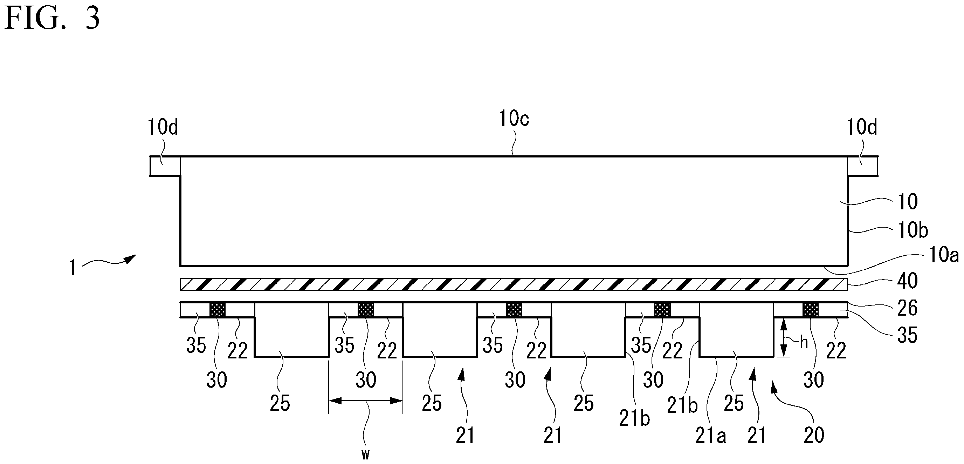

FIGS. 2 and 3 illustrate another example of the battery unit 1. In the example illustrated in FIG. 2, a flow path upper lid 26 is disposed between the cooling structure 20 and the battery pack 10. The flow path upper lid 26 is made of a Zn-based plated steel sheet. In the example of FIG. 3, a gap filler 40 is further disposed between the flow path upper lid 26 and the battery pack 10. In FIGS. 2 and 3, the flow path upper lid 26 and the gap filler 40 are drawn apart from other members in order to clarify a positional relationship between the members, but actually, the flow path upper lid 26, the gap filler 40, and other members are joined to each other. There is a case where it is difficult to join the bottom surface portion 10a and the cooling structure 20 (here, the flow path upper lid 26) without a gap due to some cause (errors in dimensional accuracy, complicated irregularity shapes formed on a surface of the bottom surface portion 10a of the battery unit 1, and the like). In such a case, the structure illustrated in FIG. 3 may be adopted. The gap filler 40 generally contains a pigment having high thermal conductivity in a resin, and heat exchange efficiency can be improved by inserting the gap filler 40 between different substances. In the present embodiment, a thermal conductivity of the gap filler 40 is preferably 3.5 W/m or more, and examples of the gap filler 40 include "SDP-3540-A" manufactured by Shin-Etsu Silicone. A thickness of the gap filler is preferably 0.1 mm to 8.0 mm, and more preferably 0.5 mm to 3.0 mm. As described above, when a gap is formed between the battery pack 10 and the cooling structure 20 due to a variation in dimensional accuracy or the like at the time of connecting the battery pack 10 and the cooling structure 20, the gap filler 40 or the like having thermal conductivity is inserted to fill the gap, so that heat exchangeability can be enhanced. However, the gap filler 40 preferably has a thermal conductivity lower than that of the Zn-based plated steel sheet, and is preferably 0.5 mm to 3.0 mm in order to fill a gap due to a variation in dimensional accuracy of members.

In the examples of FIGS. 2 and 3, the bottom surface portion 10a may not necessarily be made of the above-described metal material. This is because the bottom surface portion 10a does not come into contact with the coolant.

### <2. Configuration of Zn-based plated steel sheet>

Next, an example of the Zn-based plated steel sheet constituting the battery pack 10 and the flow path-forming portion 21 will be described in detail.

The Zn-based plated steel sheet is a steel sheet on which a plating layer containing Zn is formed. The plating layer may be formed only on one side of the steel sheet, but is preferably formed on both sides. Examples of the Zn-based plated steel sheet include a galvanized steel sheet, a zinc-nickel plated steel sheet, a zinc-iron plated steel sheet, a zinc-chromium plated steel sheet, a zinc-aluminum plated steel sheet, a zinc-titanium plated steel sheet, a zinc-magnesium plated steel sheet, a zinc-manganese plated steel sheet, a zinc-aluminum (Al)-magnesium (Mg) plated steel sheet, and a zinc-aluminum-magnesium-silicon plated steel sheet. Furthermore, it is also possible to use a Zn-based plated steel sheet in which a small amount of different metal elements or impurities such as cobalt, molybdenum, tungsten, nickel, titanium, chromium, aluminum, manganese, iron, magnesium, lead, bismuth, antimony, tin, copper, cadmium, and arsenic are contained in these plating layers, or an inorganic substance such as silica, alumina, or titania is dispersed. Furthermore, the above-described plating can be combined with other types of plating, and for example, multilayer plating combined with iron plating, iron-phosphorus plating, nickel plating, cobalt plating, or the like is also applicable. A plating method is not particularly limited, and may be any known method such as an electroplating method, a hot-dip plating method, a vapor deposition plating method, a dispersion plating method, or a vacuum plating method.

Furthermore, an inorganic film or a resin film is formed as a chemical conversion coating film on a surface (may be only one side, but preferably both sides) of the Zn-based plated steel sheet. The inorganic film contains a Si-based component or a Zr-based component as a main component (for example, 50 mass% or more as mass%). The inorganic film may contain an organic component.

The inorganic film or the resin film preferably has conductivity. In this case, weldability or electrodeposition coatability of the Zn-based plated steel sheet can be improved. Furthermore, the inorganic film is preferably composed of a compound phase containing one or more of a Si-O bond, a Si-C bond, and a Si-OH bond. In addition, an acrylic resin described later is preferably contained in the compound phase. When these requirements are satisfied, adhesion of the chemical conversion coating film can be enhanced, so that external corrosion resistance and coolant corrosion resistance of a processed portion of the Zn-based plated steel sheet can be enhanced. In addition, the inorganic film preferably contains at least one or more of a V component, a P component, and a Co component as a rust preventive component. The rust preventive component of the inorganic film is preferably one or more of vanadium oxide, phosphoric acid, and Co nitrate. In addition, a thickness of the inorganic film is preferably more than 0 µm and 1.5 µm or less. In this case, the conductivity or adhesion of the chemical conversion coating film described above can be further enhanced.

The resin film preferably contains a resin, a rust preventive pigment, and a conductive pigment. Furthermore, the resin film preferably contains any one or more of metal particles, intermetallic compound particles, conductive oxide particles, and conductive non-oxide ceramic particles as the conductive pigment, and the conductive pigment preferably has a powder resistivity of 185 × 10⁻⁶ Qcm or less at 25°C, and preferably contains any one or more selected from the group consisting of Zn, Si, Zr, V, Cr, Mo, Mn, Fe, and W as a constituent element. Furthermore, the resin film preferably contains the conductive pigment in a proportion of 1.0 mass% or more and 30 mass% or less. Furthermore, an average thickness of the resin film is preferably 1.0 µm or more and 15 µm or less. Furthermore, an average particle size of the conductive pigment is preferably 0.5 times or more and 1.5 times or less the average thickness of the resin film. When any one or more of these requirements are satisfied, external corrosion resistance and coolant corrosion resistance of the Zn-based plated steel sheet can be further enhanced.

Examples of the chemical conversion coating film include those listed in Japanese Patent Publication No. 4776458, Japanese Patent Publication No. 5336002, Japanese Patent Publication No. 6191806, Japanese Patent Publication No. 6263278, PCT International Publication No. WO2020/202461, and Japanese Patent Publication No. 4084702. Therefore, the chemical conversion coating films listed in these publications can be suitably used as the chemical conversion coating film of the present embodiment. Here, an outline of the chemical conversion coating film will be described.

A first example of the chemical conversion coating film is an example of an inorganic film, and is a chemical conversion coating film containing an organosilicon compound (silane coupling agent) as a main component. The organosilicon compound is obtained by blending a silane coupling agent (A) containing one amino group in the molecule and a silane coupling agent (B) containing one glycidyl group in the molecule at a solid content mass ratio [(A)/(B)] of 0.5 to 1.7. The organosilicon compound contains, in the molecule, two or more functional groups (a) represented by the formula - SiR¹R²R³ (wherein R¹, R², and R³ each independently represent an alkoxy group or a hydroxyl group, and at least one represents an alkoxy group) and one or more of at least one type of hydrophilic functional groups (b) selected from a hydroxyl group (which is separate from those that can be contained in the functional group (a)) and an amino group, and has an average molecular weight of 1000 to 10000.

In the first example, the Zr-based component is contained in the chemical conversion coating film as zirconium hydrofluoric acid. The chemical conversion coating film contains the V component as a vanadium compound, the P component as phosphoric acid, and the Co component as at least one selected from the group consisting of cobalt sulfate, cobalt nitrate, and cobalt carbonate. Examples of the vanadium compound include vanadium pentoxide V₂O₅, metavanadic acid HVO₃, ammonium metavanadate, sodium metavanadate, vanadium oxytrichloride VOCl₃, vanadium trioxide V₂O₃, vanadium dioxide VO₂, vanadium oxide, vanadium oxysulfate VOSO₄, vanadium oxyacetylacetonate VO(OC(=CH₂)CH₂COCH₃))₂, vanadium acetylacetonate V(OC(=CH₂)CH₂COCH₃))₃, vanadium trichloride VCl₃, and phosphovanadomolybdic acid. In addition, a pentavalent vanadium compound reduced to tetravalent to divalent one with an organic compound having at least one functional group selected from the group consisting of a hydroxyl group, a carbonyl group, a carboxyl group, a primary to tertiary amino group, an amide group, a phosphoric acid group, and a phosphonic acid group can also be used.

A second example of the chemical conversion coating film is an example of an inorganic film, and is a chemical conversion coating film containing an organosilicon compound (silane coupling agent) as a main component. The organosilicon compound has a cyclic siloxane structure in its structure. Here, the term "cyclic siloxane bond" refers to a cyclic structure having a configuration in which Si-O-Si bonds are continuous and composed only of Si and O bonds and having a Si-O repetition number of 3 to 8.

The organosilicon compound is obtained by blending a silane coupling agent (A) containing at least one amino group in the molecule and a silane coupling agent (B) containing at least one glycidyl group in the molecule at a solid content mass ratio [(A)/(B)] of 0.5 to 1.7. It is preferable that the organosilicon compound (W) thus obtained contains, in the molecule, two or more functional groups (a) represented by the formula -SiR¹R²R³ (wherein R¹, R², and R³ each independently represent an alkoxy group or a hydroxyl group, and at least one of R¹, R², and R³ represents an alkoxy group) and one or more of at least one type of hydrophilic functional groups (b) selected from the group consisting of a hydroxyl group (which is separate from hydroxyl groups that can be contained in the functional group (a)) and an amino group, and has an average molecular weight of 1000 to 10000.

In the second example, the Zr-based component is contained in the chemical conversion coating film as a zirconium compound. Examples of the zirconium compound include zirconium hydrofluoric acid, zirconium ammonium fluoride, zirconium sulfate, zirconium oxychloride, zirconium nitrate, and zirconium acetate. Among them, the zirconium compound is more preferably zirconium hydrofluoric acid. When zirconium hydrofluoric acid is used, more excellent corrosion resistance and coatability can be obtained.

The chemical conversion coating film contains the V component as a vanadium compound, the P component as a phosphoric acid compound, and the Co component as at least one selected from the group consisting of cobalt sulfate, cobalt nitrate, and cobalt carbonate. Examples of the vanadium compound include vanadium pentoxide V₂O₅, metavanadic acid HVO₃, ammonium metavanadate, sodium metavanadate, vanadium oxytrichloride VOCl₃, vanadium trioxide V₂O₃, vanadium dioxide VO₂, vanadium oxide, vanadium oxysulfate VOSO₄, vanadium oxyacetylacetonate VO(OC(=CH₂)CH₂COCH₃)₂, vanadium acetylacetonate V(OC(=CH₂)CH₂COCH₃)₃, vanadium trichloride VCl₃, and phosphovanadomolybdic acid. In addition, a pentavalent vanadium compound reduced to tetravalent to divalent one with an organic compound having at least one functional group selected from the group consisting of a hydroxyl group, a carbonyl group, a carboxyl group, a primary to tertiary amino group, an amide group, a phosphoric acid group, and a phosphonic acid group can also be used.

Examples of the phosphoric acid compound include phosphoric acid, ammonium phosphate, potassium phosphate, and sodium phosphate. Among them, the phosphoric acid compound is more preferably phosphoric acid. When phosphoric acid is used, more excellent corrosion resistance can be obtained.

A third example of the chemical conversion coating film is an example of an inorganic film, and contains an acrylic resin, zirconium, vanadium, phosphorus, and cobalt. More specifically, the chemical conversion coating film contains a particulate acrylic resin (resin particles) and an inhibitor phase. The acrylic resin is preferably a resin containing a polymer of a (meth)acrylic acid alkyl ester, and may be a polymer obtained by polymerizing only a (meth)acrylic acid alkyl ester, or may be a copolymer obtained by polymerizing a (meth)acrylic acid alkyl ester and other monomers. "(Meth)acrylic" means "acrylic" or "methacrylic". The inhibitor phase contains zirconium, vanadium, phosphorus, and cobalt. Zirconium forms a crosslinked structure with the acrylic resin.

A fourth example of the chemical conversion coating film is an example of an inorganic film, and includes a zirconium carbonate compound, an acrylic resin, a vanadium compound, a phosphorus compound, and a cobalt compound. Examples of the zirconium carbonate compound include zirconium carbonate, ammonium zirconium carbonate, potassium zirconium carbonate, and sodium zirconium carbonate, and one or more of these compounds can be used. Among them, zirconium carbonate and ammonium zirconium carbonate are preferable from the viewpoint of excellent corrosion resistance.

The acrylic resin is a resin obtained by copolymerizing monomer components including at least styrene (b1), (meth)acrylic acid (b2), a (meth)acrylic acid alkyl ester (b3), and acrylonitrile (d4), in which an amount of acrylonitrile (b4) is 20 to 38 mass% based on a solid content mass of all monomer components of the resin, and the acrylic resin is a water-soluble resin and an aqueous emulsion resin having a glass transition temperature of -12 to 15°C. That is, the acrylic resin exists in a form of resin particles in the chemical conversion coating film.

Examples of the vanadium compound include divalent to tetravalent vanadium compounds, more specifically, divalent to tetravalent vanadium compounds obtained by reducing pentavalent vanadium compounds such as vanadium pentoxide (V₂O₅), metavanadic acid (HVO₃), ammonium metavanadate, sodium metavanadate, and vanadium oxytrichloride (VOCl₃) with a reducing agent; and vanadium compounds having an oxidation number of 4 to 2 such as vanadium trioxide (V₂O₃), vanadium dioxide (VO₂), vanadium oxysulfate (VOSO₄), vanadium oxyoxalate [VO(COO)₂], vanadium oxyacetylacetonate [VO(OC(CH₃)=CHCOCH₃))₂], vanadium acetylacetonate [V(OC(CH₃)=CHCOCH₃))₃], vanadium trichloride (VCl₃), phosphovanadomolybdic acid {H_{15-X}[PV₁₂₋ₓMoₓO₄₀]·nH₂O (6 < x < 12, n < 30)}, vanadium sulfate (VSO₄·8H₂O), vanadium dichloride (VCl₂), and vanadium oxide (VO).

Examples of the phosphorus compound include inorganic acid anions having an acid group containing phosphorus and organic acid anions having an acid group containing phosphorus. Examples of the inorganic acid anion having an acid group containing phosphorus include inorganic acid anions in which at least one hydrogen atom of an inorganic acid such as orthophosphoric acid, metaphosphoric acid, condensed phosphoric acid, pyrophosphoric acid, tripolyphosphoric acid, tetraphosphoric acid, or hexametaphosphoric acid is liberated, and salts thereof.

Examples of the organic acid anion having an acid group containing phosphorus include organic acid anions in which at least one hydrogen atom of an organic phosphonic acid such as 1-hydroxymethane-1,1-diphosphonic acid, 1-hydroxyethane-1,1-diphosphonic acid, 1-hydroxypropane-1,1-diphosphonic acid, 1-hydroxyethylene-1,1-diphosphonic acid, 2-hydroxyphosphonoacetic acid, aminotri(methylene phosphonic acid), ethylenediamine-N,N,N',N'-tetra(methylene phosphonic acid), hexamethylenediamine-N,N,N',N'-tetra(methylene phosphonic acid), diethylenetriamine-N,N,N',N",N"-penta(methylene phosphonic acid), 2-phosphonobutane-1,2,4-tricarboxylic acid, inositol hexaphosphonic acid, or phytic acid; an organic phosphoric acid, or the like is liberated, and salts thereof.

Examples of the cobalt compound include cobalt sulfate, cobalt nitrate, and cobalt carbonate.

A fifth example of the chemical conversion coating film is an example of a resin film, and includes any one or more of metal particles, intermetallic compound particles, conductive oxide particles, and conductive non-oxide ceramic particles as a conductive pigment. The conductive pigment has a powder resistivity of 185 × 10⁻⁶ Qcm or less at 25°C, and contains any one or more selected from the group consisting of Zn, Si, Zr, V, Cr, Mo, Mn, Fe, and W as a constituent element.

Examples of the intermetallic compound include ferrosilicon and ferromanganese. As the conductive oxide particles, for example, a substance having conductivity by doping impurities into a crystal lattice of an oxide (doped conductive oxide) or a type in which a surface of an oxide is modified with a conductive substance can be used. As the former, a generally known substance such as a metal oxide doped with one or more metal elements selected from Al, Nb, Ga, Sn, and the like (for example, Al-doped zinc oxide, Nb-doped zinc oxide, Ga-doped zinc oxide, Sn-doped zinc oxide, and the like) can be used. As the latter, a generally known substance such as zinc oxide or silica obtained by modifying an oxide with conductive SnO₂ can be used. The conductive oxide is preferably a doped conductive oxide, and the doped conductive oxide is preferably an Al-doped zinc oxide.

The conductive non-oxide ceramic particles are composed of ceramics composed of an element or a compound not containing oxygen. Examples of the conductive non-oxide ceramic particles include boride ceramics, carbide ceramics, nitride ceramics, and silicide ceramics. In addition, the boride ceramics, the carbide ceramics, the nitride ceramics, and the silicide ceramics refer to non-oxide ceramics containing boron B, carbon C, nitrogen N, and silicon Si, respectively, as a main non-metallic constituent element, and these generally known non-oxide ceramics containing any one or more selected from the group consisting of Zn, Si, Zr, V, Cr, Mo, Mn, and W can be used. Furthermore, the non-oxide ceramic particles are more preferably the non-oxide ceramics exemplified below from the viewpoint of the presence or absence of an industrial product, stable distribution in domestic and foreign markets, a price, electric resistivity, and the like. For example, particles of Mo₂B, MoB, MoB₂, Mo₂B₅, NbB₂, VB, VB₂, W₂B₅, ZrB₂, Mo₂C, V₂C, VC, WC, W₂C, ZrC, Mo₂N, VN, ZrN, Mo₃Si, Mo₅Si₃, MoSi₂, NbSi₂, Ni₂Si, Ta₂Si, TaSi₂, TiSi, TiSi₂, V₅Si₃, VSi₂, W₃Si, WSi₂, ZrSi, ZrSi₂, CrB, CrB₂, Cr₃C₂, Cr₂N, and CrSi, and particles of a mixture of two or more selected therefrom are more preferable.

A sixth example of the chemical conversion coating film is an example of a resin film, and includes a resin having a urethane bond and conductive particles (conductive pigment). The resin having a urethane bond is an organic resin obtained from a film-forming resin raw material containing (a) a polyester polyol having at least three functional groups, and (b) a blocked product of an organic polyisocyanate or a blocked product of a prepolymer having an NCO group at the terminal obtained by a reaction between an organic polyisocyanate and an active hydrogen compound.

The polyester polyol having at least three functional groups of (a) can be obtained by esterifying a dicarboxylic acid, a glycol, and a polyol having at least three OH groups.

Examples of the dicarboxylic acid used in manufacture of the polyester polyol include aliphatic acids such as succinic acid, succinic anhydride, adipic acid, azelaic acid, sebacic acid, dodecanedioic acid, maleic acid, maleic anhydride, fumaric acid, itaconic acid, and dimer acid; and aromatic and alicyclic acids such as phthalic acid, phthalic anhydride, isophthalic acid, isophthalic acid dimethyl ester, terephthalic acid, terephthalic acid dimethyl ester, 2,6-naphthalenedicarboxylic acid, hexahydrophthalic anhydride, tetrahydrophthalic anhydride, cyclohexanedicarboxylic acid, cyclohexanedicarboxylic acid dimethyl ester, methylhexahydrophthalic anhydride, himic anhydride, and methylhimic anhydride.

Examples of the glycol include aliphatic glycols such as ethylene glycol, diethylene glycol, propylene glycol, 1,3-butylene glycol, 1,4-butylene glycol, dipropylene glycol, 1,5-pentanediol, 1,6-hexanediol, neopentyl glycol, neopentyl glycol ester of hydroxydivaric acid, triethylene glycol, 1,9-nonanediol, 3-methyl-1,5-pentanediol, 2,2,4-trimethyl-1,3-pentanediol, 2-ethyl-1,3-hexanediol, 2,4-diethyl-1,5-pentanediol, polycaprolactone diol, polypropylene glycol, polytetramethylene ether glycol, polycarbonate diol, 2-n-butyl-2-ethyl-1,3-propanediol, and 2,2-diethyl-1,3-propanediol; and aliphatic or aromatic glycols such as cyclohexanedimethanol, cyclohexanediol, 2-methyl-1,1-cyclohexanedimethanol, xylylene glycol, bishydroxyethyl terephthalate, 1,4-bis(2-hydroxyethoxy)benzene, hydrogenated bisphenol A, an ethylene oxide adduct of bisphenol A, and a propylene oxide adduct of bisphenol A.

Examples of the polyol having at least three OH groups include glycerin, trimethylolpropane, trimethylolethane, 1,2,6-hexanetriol, pentaerythritol, diglycerin, and an ethylene oxide adduct, a propion oxide adduct, or an ε-caprolactane adduct using these polyols as an initiator.

Examples of the blocked product of (b) include compounds having at least two NCO groups, for example, aliphatic diisocyanates such as trimethylene diisocyanate, tetramethylene diisocyanate, hexamethylene diisocyanate, pentamethylene diisocyanate, 1,2-propylene diisocyanate, 2,3-butylene diisocyanate, 1,3-butylene diisocyanate, 2,4,4-or 2,2,4-trimethylhexamethylene diisocyanate, dodecamethylene diisocyanate, and 2,6-diisocyanatomethylcaproate; cycloalkylene-based diisocyanates such as 1,3-cyclopentane diisocyanate, 1,4-cyclohexane diisocyanate, 1,3-cyclohexane diisocyanate, 3-isocyanatomethyl-3,5,5-trimethylhexyl isocyanate, 4,4'-methylenebis(cyclohexyl isocyanate), methyl-2,4-cyclohexane diisocyanate, methyl-2,6-cyclohexane diisocyanate, 1,2- bi s (i s ocyanatomethyl)cyclohexane, 1,4- bi s (is ocyanatometh yl)cyclohexane, 1,3-bis(isocyanatomethyl)cyclohexane, and trans-cyclohexane- 1,4-diisocyanate; aromatic diisocyanates such as m-xylene diisocyanate, m-phenylene diisocyanate, p-phenylene diisocyanate, 4,4'-diphenyl diisocyanate, 1,5-naphthalene diisocyanate, 4,4'-diphenylmethane diisocyanate, 2,4- or 2,6-tolylene diisocyanate, 4,4'-toluidine diisocyanate, dianisidine diisocyanate, and 4,4'-diphenyl ether diisocyanate; araliphatic diisocyanates such as ω,ω'-diisocyanate-1,3-dimethylbenzene, ω,ω'-diisocyanate-1,4-dimethylbenzene, ω,ω'-diisocyanate-1,4-diethylbenzene, and α,α,α',α'-tetramethylmetaxylylene diisocyanate; triisocyanates such as triphenylmethane-4,4',4"-triisocyanate, 1,3,5-triisocyanatebenzene, 2,4,6-triisocyanatetoluene, and (ω-isocyanateethyl-2,6-diisocyanatocaproate; a blocked product of a tetraisocyanate such as 4,4'-diphenylmethylmethane-2,2',5,5'-tetraisocyanate; a blocked product of a derivative from an isocyanate compound such as a dimer, a trimer, a biuret, an allophanate, a carbodiimide, a polymethylene polyphenyl polyisocyanate (crude MDI, c-MDI, polymeric MDI), or crude TDI; or a blocked product of a prepolymer having an NCO group at the terminal obtained by a reaction of these compounds with an active hydrogen compound.

The conductive particles are particles having corrosion resistance that are alloys or compounds containing 50 mass% or more of Si, or composites thereof. The conductive particles are preferably ferrosilicon. In addition, a rust preventive pigment may be added to the chemical conversion coating film. Examples of the rust preventive pigment include known rust preventive pigments such as hexavalent chromates such as strontium chromate and calcium chromate. When it is desired to avoid use of a hexavalent chromium compound as a rust inhibitor, one that releases one or more of silicate ions, phosphate ions, and vanadate ions can be used.

Of course, examples of the chemical conversion coating film of the present embodiment are not limited to the above, and for example, chemical conversion coating films listed in Examples described later can also be suitably used.

A method of forming the chemical conversion coating film described above is not particularly limited, and a chemical conversion coating solution (film coating solution) corresponding to each composition described above may be applied to a Zn-based plated steel sheet by a known method, and baked and dried. An example of a preferable combination of the Zn-based plated steel sheet and the chemical conversion coating film is a combination of a Zn-Al-Mg plated steel sheet and an inorganic film containing a Si-based component as a main component. Still other examples include a combination of a Zn-Al plated steel sheet and a resin film.

### [Examples]

Hereinafter, the present invention will be described in more detail with reference to Examples. Examples described below are merely examples of the present invention, and do not limit the present invention.

### <Preparation of material>

As ultra-low carbon steel excellent in processability, steel having the steel components shown in Table 1 (the balance being iron and impurities) was hot-rolled, and subjected to pickling and cold rolling to prepare a cold-rolled steel sheet having a sheet thickness of 0.6 mm.

**[Table 1]**

| Chemical component (mass%) | | | | | | | |
|---|---|---|---|---|---|---|---|
| C | Si | Mn | P | S | Ti | Al | N |
| 0.0015 | 0.005 | 0.12 | 0.03 | 0.001 | 0.05 | 0.03 | 0.003 |

Furthermore, the cold-rolled steel sheet was annealed by a continuous hot-dip plating apparatus capable of annealing under the condition that the maximum achieving sheet temperature was 820°C, and then hot-dip galvanized to prepare a hot-dip galvanized steel sheet. Here, the gas atmosphere in the annealing furnace in the annealing step was an N₂ atmosphere containing 1.0 vol% of H₂. As the components of the plating bath in the plating step, four types of Zn-0.2 mass% Al (hereinafter also referred to as "GI"), Zn-0.09 mass% Al (hereinafter also referred to as "GA"), Zn-6 mass% Al-3 mass% Mg (hereinafter also referred to as "Zn-Al-Mg"), and Zn-11 mass% Al-3 mass% Mg-0.2 mass% Si (hereinafter also referred to as "Zn-Al-Mg-Si") were used.

In hot-dip galvanizing using a hot-dip plating bath of Zn-0.09 mass% Al plating (GA), alloying hot-dip galvanizing was performed by the following steps. That is, the steel sheet was immersed in the hot-dip plating bath. Then, while the steel sheet was pulled out from the plating bath, N₂ gas was blown from the slit nozzle to perform gas wiping, thereby adjusting the coating amount. Subsequently, the steel sheet was alloyed by heating at a sheet temperature of 480°C with an induction heater to diffuse Fe in the steel sheet into the plating layer.

In addition, the coating amount of plating of the plated steel sheet was 45 g/m² for GA and 60 g/m² for plating other than GA per one side of the steel sheet. In addition, as a comparison, a cold-rolled steel sheet subjected only to annealing in a continuous annealing line without plating was also prepared.

Subsequently, the surface of the plated steel sheet prepared in the above step was coated with a chemical conversion coating solution (film coating solution) by a roll coater as necessary. The coating amount of the chemical conversion coating solution (that is, the film thickness of the chemical conversion coating film) was performed by adjusting the rotation speed of the roll coater and the pressure between the rolls (generally referred to as a nip pressure). As a result, a chemical conversion coating film having a predetermined film thickness was formed on the plated steel sheet.

Here, when the chemical conversion coating film was an inorganic film, the chemical conversion coating solution was applied and then dried in a hot air furnace under the condition that an achieving sheet temperature was 80°C. When the chemical conversion coating film was a resin film, a chemical conversion coating PALCOAT E200 manufactured by Nihon Parkerizing Co., Ltd. was applied to the plated steel sheet by a roll coater as a pretreatment for enhancing adhesion with the plated steel sheet before applying the chemical conversion coating solution to the plated steel sheet, and dried in a hot air furnace under the condition of an achieving sheet temperature of 80°C. Thereafter, the chemical conversion coating solution was applied with a predetermined film thickness by a roll coater, and then dried in a hot air furnace under the condition that an achieving sheet temperature was 200°C. The chemical conversion coating film was applied to both sides of the plated steel sheet. The film thickness after coating and drying of various films was measured by embedding the coated steel sheet in a resin so that the vertical cross section can be observed and polishing the steel sheet with a scanning electron microscope. The observation magnification with the scanning electron microscope was determined by appropriately selecting the optimum magnification according to the film thickness of the film.

It is to be noted that regarding a sample prepared with an inorganic film having a film thickness of more than 1.5 µm after coating and drying, it was not able to obtain a uniformly formed film due to cracks in the film or detachment of the film in any of the coating solutions, and therefore it was determined that it was difficult to manufacture an inorganic film having a film thickness of more than 1.5 µm. Details of steel sheets prepared by coating various plated steel sheets with a film are described in Tables 5A to 5E.

### <Method of preparing inorganic chemical conversion coating solution>

An inorganic chemical conversion coating solution (chemical conversion coating solution for forming an inorganic film) was prepared by the following steps. That is, an aqueous solution in which γ-aminopropyltriethoxysilane was blended at 10 g/L as an inorganic chemical conversion coating solution containing a Si-based component as a main component was prepared. Further, 1.3 g/L of vanadium oxide, 0.7 g/L of phosphoric acid, and 0.5 g/L of Co nitrate were blended with the prepared γ-aminopropyltriethoxysilane aqueous solution as necessary to prepare an inorganic chemical conversion coating solution.

Further, an aqueous solution in which ammonium zirconium carbonate was blended at 3.0 g/L as an inorganic chemical conversion coating solution containing a Zr-based component as a main component was prepared. Further, 1.3 g/L of vanadium oxide, 0.7 g/L of phosphoric acid, and 0.5 g/L of Co nitrate were blended with the prepared ammonium zirconium carbonate aqueous solution as necessary to prepare an inorganic chemical conversion coating solution. Details of the prepared inorganic chemical conversion coating solution are described in Table 2.

**[Table 2]**

| Film No. | Main component | Vanadium oxide | Phosphoric acid | Co nitrate | Presence or absence of Si-O bond, Si-C bond, and Si-OH bond of dried film |
|---|---|---|---|---|---|
| Si-based inorganic film-1 | γ-Aminopropyltriethoxysilane | Added | Added | Added | Presence of any bond |
| Si-based inorganic film-2 | γ-Aminopropyltriethoxysilane | Added | Added | Not added | Presence of any bond |
| Si-based inorganic film-3 | γ-Aminopropyltriethoxysilane | Not added | Added | Added | Presence of any bond |
| Si-based inorganic film-4 | γ-Aminopropyltriethoxysilane | Added | Not added | Added | Presence of any bond |
| Si-based inorganic film-5 | γ-Aminopropyltriethoxysilane | Added | Not added | Not added | Presence of any bond |
| Si-based inorganic film-6 | γ-Aminopropyltriethoxysilane | Not added | Added | Not added | Presence of any bond |
| Si-based inorganic film-7 | γ-Aminopropyltriethoxysilane | Not added | Not added | Added | Presence of any bond |
| Si-based inorganic film-8 | γ-Aminopropyltriethoxysilane | Not added | Not added | Not added | Presence of any bond |
| Zr-based inorganic film-1 | Ammonium zirconium carbonate | Added | Added | Added | Absence of any bond |
| Zr-based inorganic film-2 | Ammonium zirconium carbonate | Added | Added | Not added | Absence of any bond |
| Zr-based inorganic film-3 | Ammonium zirconium carbonate | Not added | Added | Added | Absence of any bond |
| Zr-based inorganic film-4 | Ammonium zirconium carbonate | Added | Not added | Added | Absence of any bond |
| Zr-based inorganic film-5 | Ammonium zirconium carbonate | Added | Not added | Not added | Absence of any bond |
| Zr-based inorganic film-6 | Ammonium zirconium carbonate | Not added | Added | Not added | Absence of any bond |
| Zr-based inorganic film-7 | Ammonium zirconium carbonate | Not added | Not added | Added | Absence of any bond |
| Zr-based inorganic film-8 | Ammonium zirconium carbonate | Not added | Not added | Not added | Absence of any bond |

Whether or not the inorganic film contained a Si-O bond or the like was confirmed by the following method. That is, the prepared inorganic chemical conversion coating solution was applied onto any of the plated steel sheets prepared above using a wire bar, and dried under the condition of an achieving sheet temperature of 80°C. As a result, an inorganic film was formed on the plated steel sheet. Next, the surface of the film was measured using IRT-5200 manufactured by JASCO Corporation, and whether or not the inorganic film contained one or more of a Si-O bond, a Si-C bond, and a Si-OH bond was determined from the assignment of the observation peak derived from the resin component in the infrared absorption spectrum of the obtained inorganic film. Specifically, when a peak was observed in at least one of the vicinity of 3250 cm⁻¹, the vicinity of 1080 to 1020 cm⁻¹, the vicinity of 500 to 300 cm⁻¹, and the vicinity of 900 to 700 cm⁻¹, it was determined that the inorganic film contained any one or more of a Si-O bond, a Si-C bond, and a Si-OH bond. The determination results are shown in Table 2.

### <Method of preparing resin-based chemical conversion coating solution>

A resin-based chemical conversion coating solution (chemical conversion coating solution for forming a resin film) was prepared by the following steps. That is, 30 mass% of "VYLON(R) 300" manufactured by Toyobo Co., Ltd. dissolved in cyclohexanone as a solvent was prepared as a polyester resin, and 20 parts by mass in terms of solid content of a melamine resin "CYMEL(R) 303" manufactured by Allnex was added to and mixed with 100 parts by mass of the solid content of this solution. In addition, 5 mass% of a curing catalyst "CYCAT(R) 600" manufactured by Allnex was added to and mixed with the total solid content of the prepared mixed solution. In this way, a base coating solution for obtaining a resin film was prepared.

Next, the following particles were mixed with the prepared base coating solution to prepare a resin-based chemical conversion coating solution. The addition amount of the particles was adjusted by the following method. That is, the solid content mass ratio (mass ratio with respect to the solid content other than the particles) of the particles to be added to the base coating solution in the resin film was determined, and the volume ratio was calculated from the specific gravity of the resin film solid content and the specific gravity of the particles. Next, the addition amount of the particles was adjusted so that the calculated volume ratio was the volume ratio described in Table 3. As the specific gravity, a catalog value or a literature value of each substance was used. Details of the resin-based coating solution are shown in Table 3.

**[Table 3]**

| Film No. | Conductive particles | | |
|---|---|---|---|
| | Type | Powder resistivity | Addition amount |
| | | (Ω cm) | (vol%) |
| Resin film-1 | VB2 | ≤ 185 × 10⁻⁶ | 30 |
| Resin film-2 | VB2 | ≤ 185 × 10⁻⁶ | 5 |
| Resin film-3 | VB2 | ≤ 185 × 10⁻⁶ | 10 |
| Resin film-4 | VB2 | ≤ 185 × 10⁻⁶ | 50 |
| Resin film-5 | Al-ZnO | ≤ 185 × 10⁻⁶ | 30 |
| Resin film-6 | Zn | ≤ 185 × 10⁻⁶ | 30 |
| Resin film-7 | Fe-Si | ≤ 185 × 10⁻⁶ | 30 |
| Resin film-8 | Fe-Si | ≤ 185 × 10⁻⁶ | 5 |
| Resin film-9 | Fe-Si | ≤ 185 × 10⁻⁶ | 10 |
| Resin film-10 | Fe-Si | ≤ 185 × 10⁻⁶ | 50 |
| Resin film-11 | Fe-Mn | ≤ 185 × 10⁻⁶ | 30 |
| Resin film-12 | ZrB2 | ≤ 185 × 10⁻⁶ | 30 |
| Resin film-13 | MoSi2 | ≤ 185 × 10⁻⁶ | 30 |
| Resin film-14 | CrB2 | ≤ 185 × 10⁻⁶ | 30 |
| Resin film-15 | WSi2 | ≤ 185 × 10⁻⁶ | 30 |
| Resin film-16 | Ni | ≤ 185 × 10⁻⁶ | 30 |
| Resin film-17 | Alumina | ≤ 185 × 10⁻⁶ | 30 |
| Resin film-18 | Conductive Ti | > 185 × 10⁻⁶ | 30 |
| Resin film-19 | TiO2 | > 185 × 10⁻⁶ | 30 |
| Resin film-20 | AlN | > 185 × 10⁻⁶ | 30 |
| Resin film-21 | Not added | | |

- Vanadium boride: "VB₂-O" manufactured by JAPAN NEW METALS CO., LTD. classified through a sieve to have an average particle size of 3.1 µm was used. Hereinafter, it is also referred to as "VB2". The average particle size was calculated based on the mass% of each classified particle size category.
- Al-doped zinc oxide: Conductive zinc oxide (Al-Doped ZnO) "23-K" manufactured by HAKUSUI TECH. having a primary particle size of 120 to 250 nm (catalog value) was used. Hereinafter, it is also referred to as "Al-ZnO".
- Metal zinc: Zinc particles as a reagent classified using a sieve to have an average particle size of 10 µm were used. Hereinafter, it is also referred to as "Zn".
- Ferrosilicon: Ferrosilicon manufactured by MARUBENI TETSUGEN CO., LTD. pulverized into fine particles by a pulverizer and classified using a sieve to have an average particle size of 3.5 µm was used. Hereinafter, it is also referred to as "Fe-Si".
- Ferromanganese: Ferrosilicon manufactured by MARUBENI TETSUGEN CO., LTD. pulverized into fine particles by a pulverizer and classified using a sieve to have an average particle size of 3.5 µm was used. Hereinafter, it is also referred to as "Fe-Mn".
- Zirconium boride: "ZrB₂-O" manufactured by JAPAN NEW METALS CO., LTD. classified through a sieve to have an average particle size of 2 µm was used. Hereinafter, it is also referred to as "Zrβ2".
- Molybdenum silicide: "MoSi₂-F" manufactured by JAPAN NEW METALS CO., LTD. classified through a sieve to have an average particle size of 3.5 µm was used. Hereinafter, it is also referred to as "MoSi2".
- Chromium boride: "CrB₂-O" manufactured by JAPAN NEW METALS CO., LTD. classified through a sieve to have an average particle size of 5 µm was used. Hereinafter, it is also referred to as "CrB2".
- Tungsten silicide: "B₂-O" manufactured by JAPAN NEW METALS CO., LTD. classified through a sieve to have an average particle size of 2 µm was used. Hereinafter, it is also referred to as "WSi2".
- Nickel: A nickel powder as a reagent classified using a sieve to have an average particle size of 5 µm was used. Hereinafter, it is also referred to as "Ni".
- Conductive titanium oxide: Sn-doped titanium oxide "ET-500W" manufactured by ISHIHARA SANGYO KAISHA, LTD. having an average particle size of 2 to 3 µm (catalog value) was used. Hereinafter, it is also referred to as "conductive Ti".
- Alumina: Fine particle alumina "A-42-2" manufactured by SHOWA DENKO K.K. having an average particle size (particle size distribution center diameter) of 4.7 µm (catalog value) was used. Hereinafter, it is also referred to as "alumina".
- Titanium oxide: "TIPAQUE^{(R)} CR-95" manufactured by ISHIHARA SANGYO KAISHA, LTD. having an average particle size of 0.28 µm (catalog value) was used. Hereinafter, it is also referred to as "TiO2".
- Aluminum nitride: A filler aluminum nitride powder manufactured by Tokuyama Corporation Corporation having a particle size of 1 µm (catalog value) was used. Hereinafter, it is also referred to as "AIN".

The powder resistivity of the particles in Table 3 was determined as a resistance value when each powder was compressed at 25°C and 10 MPa using a powder resistance measurement system model MCP-PD51 manufactured by Mitsubishi Chemical Analytech Co., Ltd.

### <Evaluation of prepared metal sheet>

### (0. Evaluation of strength)

The strength of the prepared Zn-based plated steel sheet or the like was evaluated by a tensile test in accordance with the provision of JIS Z 2241. As a result, the strength of each of the Zn-based plated steel sheets or the like was 270 MPa or more. Next, an Al sheet (A6063) having the same thickness as the Zn-based plated steel sheet or the like was prepared, and the strength of this Al sheet was evaluated by the same method as described above, and consequently, it was 200 MPa or less. Therefore, it was confirmed that the Zn-based plated steel sheet or the like had a high strength.

### (1. Evaluation of coolant resistance)

Coolant resistance was investigated when the prepared Zn-based plated steel sheet or the like was used for a cooling structure (cooling device) of a battery unit. Specifically, the prepared Zn-based plated steel sheet or the like was subjected to Erichsen processing to prepare a cup-shaped cylindrical product having Φ 50 mm and a drawing height of 40 mm. 30 mL of a coolant was added to the inside of this cylindrical product, and then the cylindrical product was sealed with a lid. As the coolant, an aqueous solution obtained by diluting a long-life coolant solution manufactured by Nissan Motor Co., Ltd. to 30 mass% with water was used. These were allowed to stand in a thermostatic bath at 90°C for 1000 hours to promote deterioration of the steel sheet in the coolant immersion portion. In addition, a similar test using a deteriorated solution obtained by adding 800 ppm of formic acid to a 30 mass% aqueous solution of the long-life coolant solution was also performed assuming a case where the coolant solution was deteriorated. After the test, the coolant immersed in the cylindrical product was removed, and the cylindrical product was dried. Thereafter, the corrosion state of the coolant immersion portion was observed, and the coolant resistance was evaluated according to the following criteria. The results are shown in Tables 5A to 5E.
5 points: No change in appearance
4 points: Discolored to black or dotted white rust was generated.
3 points: White rust was generated, but the white rust generation area of the coolant immersion portion was less than 20% with respect to the total area of the coolant immersion portion.
2 points: The white rust generation rate was 20% or more and less than 80%.
1 point: The white rust generation rate was 80% or more, or red rust was generated.

### (2. Corrosion resistance test)

A corrosion resistance test was performed as a corrosion resistance evaluation in a portion where the battery unit (including the cooling structure) was exposed to the outside air. Since it is common to apply electrodeposition coating to a portion exposed to the outside air, corrosion resistance after electrodeposition coating was evaluated in the present invention.

Specifically, a steel billet obtained by cutting the prepared steel sheet into a size of width 70 mm × length 150 mm was subjected to degreasing, surface adjustment, and zinc phosphate treatment, and then electrodeposition coating was performed. Specifically, the steel billet was degreased by immersing the steel billet in a degreasing agent "FINE CLEANER E6408" manufactured by Nihon Parkerizing Co., Ltd. under the condition of 60°C for 5 minutes. The degreased steel billet was immersed in "PREPALENE-X" manufactured by Nihon Parkerizing Co., Ltd. under the condition of 40°C for 5 minutes to perform surface adjustment. Thereafter, the steel billet was immersed in a zinc phosphate chemical conversion agent "PALBOND L3065" manufactured by Nihon Parkerizing Co., Ltd. at 35°C for 3 minutes to perform zinc phosphate treatment. The steel billet after being subjected to the zinc phosphate treatment was washed with water and dried in an oven at 150°C. Thereafter, an electrodeposition coating material "Power Float 1200" manufactured by Nippon Paint Co., Ltd. was electrodeposition coated on the steel billet at a thickness of 15 µm per one side, and baked in an oven at 170°C for 20 minutes. The electrodeposition-coated steel billet prepared in the above steps was cut with a cutter knife to prepare a test piece.

A cyclic corrosion test (CCT) was performed using the prepared test piece. The mode of the CCT was performed according to an automobile industry standard, JASO-M609. A surface of the electrodeposition-coated film having a cut was used as an evaluation surface, and a cyclic corrosion test was performed by installing the electrodeposition-coated film in a tester so that salt water was sprayed onto the evaluation surface.

The test was performed 120 cycles (1 cycle for 8 hours), and the corrosion state from the cut portion was observed to evaluate corrosion resistance according to the following criteria. The results are shown in Tables 5Ato 5E.
5 points: A case where the swelling width of the coated film from the cut portion was 15 mm or less and red rust was not generated
4 points: A case where the swelling width of the coated film from the cut portion was more than 15 mm and 20 mm or less, and red rust was not generated
3 points: A case where the swelling width of the coated film from the cut portion was more than 20 mm or less and red rust was not generated
2 points: A case where red rust was slightly generated from the cut portion
1 point: A case where red rust was generated from the entire surface of the cut portion

### <Evaluation of cooling characteristics in battery unit>

### (1. Preparation of battery unit)

The battery unit 1 illustrated in FIG. 3 was prepared using the prepared Zn-based plated steel sheet or the like. Specifically, flat plate materials only subjected to cutting were used as the case upper lid (upper surface portion 10c) and the flow path upper lid 26. A Zn-based plated steel sheet or the like prepared separately was subjected to rectangular tube deep drawing by a pressing machine, and a flange portion was cut after the drawing, thereby preparing other portions (bottom surface portion 10a and side surface portion 10b) of the battery pack 10. In addition, the bottom surface portion 10a of the battery pack 10 was processed to have a width of 315 mm × a length of 2000 mm. During processing, a rust preventive oil was applied to the Zn-based plated steel sheet or the like, and the oil was removed by alkali degreasing after processing. The rectangular tube-shaped punch shoulder R, die shoulder R, and corner R were all 20 mm. The cooling structure 20 was also prepared by pressing. Each R in the cooling structure 20 was set to 10 mm, and the cooling structure 20 was prepared so that the number of flow paths, the flow path width, and the distance between the flow paths have the values shown in Table 4.

**[Table 4]**

| Interval between flow paths | Flow path width | Number of flow paths | Area ratio of cooling flow path to battery bottom surface |
|---|---|---|---|
| 10 mm | 51 mm | 5 | 0.81 |
| 15 mm | 45 mm | 5 | 0.71 |
| 18 mm | 15 mm | 9 | 0.43 |
| 30 mm | 41.25 mm | 4 | 0.52 |
| 30 mm | 27 mm | 5 | 0.43 |
| 30 mm | 17.5 mm | 6 | 0.23 |
| 40 mm | 15 mm | 5 | 0.23 |
| 45 mm | 9 mm | 5 | 0.14 |
| 5 mm | 57 mm | 5 | 0.9 |
| 50 mm | 3 mm | 5 | 0.048 |

Subsequently, the sealant 35 was applied to the joint portion 22 of the cooling structure 20 as illustrated in FIG. 3, and the cooling structure 20 and the flow path upper lid 26 were superimposed on each other. Next, the joint portion 22 and the flow path upper lid 26 were joined by spot welding. Hereinafter, spot welding is also referred to as "SW". At some levels, the joint portion 22 and the flow path upper lid 26 were joined by using a mechanical joining method "TOX" (registered trademark) manufactured by TOX (registered trademark) PRESSOTECHNIK GmbH & Co. KG instead of spot welding. When the interval between the water-cooling medium flow paths 25 was as narrow as less than 10 mm, and a welding tip for spot welding could not be inserted and could not be welded, both were bonded only by the sealant. In addition, when the film thickness of the resin film coated on the plated steel sheet was more than 15 µm, the film was not conducted and welding was difficult, so that both were bonded using the TOX and the sealant in combination. The cooling structure 20 was then left at room temperature for 2 weeks to cure the sealant. As the sealant, "SEALANT 45N" manufactured by Shin-Etsu Silicone was used.

Next, "SDP-3540-A" manufactured by Shin-Etsu Silicone was applied to the entire outer surface of the flow path upper lid 26, and the bottom surface portion 10a of the battery pack 10 was attached thereon as illustrated in FIG. 3 and left at room temperature for 1 week to cure the gap filler 40. Through the above steps, the battery unit 1 illustrated in FIG. 3 was manufactured. The battery unit 1 illustrated in FIGS. 1 and 2 was also manufactured. Specifically, the battery pack 10 was directly joined to the flow path upper lid 26 as illustrated in FIG. 2. At this time, the flow path upper lid 26 and the battery pack 10 were joined with a screw. In addition, the sealant 35 was applied to the cooling structure 20 as illustrated in FIG. 1, and the cooling structure 20 and the battery pack 10 were superimposed on each other. Next, the joint portion 22 and the battery pack 10 were joined by spot welding. When the interval between the water-cooling medium flow paths 25 was as narrow as less than 10 mm, and a welding tip for spot welding could not be inserted and could not be welded, both were bonded only by the sealant.

Then, the bottom surface of the inside of the battery pack 10 was covered with a rubber heater as a substitute for a battery cell that generates heat, and the battery pack 10 was covered with the case upper lid. When the lid was put on, the sealant 10d was applied to the case flange portion to seal the battery pack. As the sealant, "SEALANT 45N" manufactured by Shin-Etsu Silicone was used. The metal materials constituting the battery pack 10 and the cooling structure 20 were the same. That is, the battery pack 10, the flow path upper lid 26, and the cooling structure 20 constituting one battery unit 1 are made of the same metal material.

### (2. Cooling characteristics evaluation test of battery unit)

A current was applied to the rubber heater of the prepared battery unit 1 to heat the battery unit 1. Here, a current value at which the surface temperature of the rubber heater was 50°C was searched in advance, and the current value was set to a fixed value and applied to the rubber heater. Then, a coolant was caused to flow through the water-cooling medium flow path 25. As the coolant, an aqueous solution obtained by diluting a long-life coolant solution manufactured by PITWORK to 30 mass% with water was used. In addition, hoses, pumps, and chillers were attached to flow path ends on both sides of the cooling structure 20 to constitute a circulation path, and the coolant was circulated in this circulation path. Here, the chillers were controlled so that the temperature of the cooling water was 25 to 30°C. Then, the temperature of the surface of the rubber heater in the case immediately above the intermediate portion between the cooling flow paths after 1 hour from the start of the cooling water circulation was measured, and a case where the temperature was 8°C or more lower than that in a state where the cooling water was not circulated was evaluated as Excellent, a case where the temperature decrease was less than 8°C and 5°C or more was evaluated as Good, a case where the temperature decrease was less than 5°C and 2°C or more was evaluated as Fair, and a case where the temperature decrease was less than 2°C was evaluated as Poor. The cooling characteristics evaluation test of the battery unit 1 was performed in a room kept at 25°C by air conditioning. The results are shown in Tables 5A to 5E.

**[Table 5A]**

| No. | Steel sheet type | Film | | Coolant resistance | | Corrosion resistance | Interval between flow paths | Number of flow paths | Flow path width | Area ratio of cooling flow path to battery bottom surface | Joining method | Battery unit structure | | | Remarks |
|---|---|---|---|---|---|---|---|---|---|---|---|---|---|---|---|
| | | Type | Film thickness (µm) | Without formic acid | With formic acid | | | | | | | Case-cooling structure (FIG. 1) | Case-upper lid-cooling structure (FIG. 2) | Case-G.F.-upper lid-cooling structure (FIG. 3) | |
| 1 | Zn-Al-Mg | Si-based inorganic film-1 | 0.5 | 5 points | 5 points | 5 points | 10 mm | 5 | 51 mm | 0.81 | TOX^{®} + sealant | Excellent | Excellent | Excellent | Example of the invention of the present application |
| 2 | Zn-Al-Mg | Si-based inorganic film-1 | 0.5 | 5 points | 5 points | 5 points | 10 mm | 5 | 51 mm | 0.81 | SW + sealant | Excellent | Excellent | Excellent | Example of the invention of the present application |
| 3 | Zn-Al-Mg | Si-based inorganic film-1 | 0.5 | 5 points | 5 points | 5 points | 15 mm | 5 | 45 mm | 0.71 | SW + sealant | Excellent | Excellent | Excellent | Example of the invention of the present application |
| 4 | Zn-Al-Mg | Si-based inorganic film-1 | 0.5 | 5 points | 5 points | 5 points | 15 mm | 5 | 45 mm | 0.71 | TOX^{®} + sealant | Excellent | Excellent | Excellent | Example of the invention of the present application |
| 5 | Zn-Al-Mg | Si-based inorganic film-1 | 0.5 | 5 points | 5 points | 5 points | 18 mm | 9 | 15 mm | 0.43 | SW + sealant | Excellent | Excellent | Good | Example of the invention of the present application |
| 6 | Zn-Al-Mg | Si-based inorganic film-1 | 0.5 | 5 points | 5 points | 5 points | 30 mm | 4 | 41.25 mm | 0.52 | TOX^{®} + sealant | Excellent | Excellent | Good | Example of the invention of the present application |
| 7 | Zn-Al-Mg | Si-based inorganic film-1 | 0.5 | 5 points | 5 points | 5 points | 30 mm | 4 | 41.25 mm | 0.52 | SW + sealant | Excellent | Excellent | Good | Example of the invention of the present application |
| 8 | Zn-Al-Mg | Si-based inorganic film-1 | 0.5 | 5 points | 5 points | 5 points | 30 mm | 5 | 27 mm | 0.43 | SW + sealant | Excellent | Good | Good | Example of the invention of the present application |
| 9 | Zn-Al-Mg | Si-based inorganic film-1 | 0.5 | 5 points | 5 points | 5 points | 30mm | 6 | 17.5 mm | 0.23 | SW + sealant | Excellent | Good | Good | Example of the invention of the present application |
| 10 | Zn-Al-Mg | Si-based inorganic film-1 | 0.5 | 5 points | 5 points | 5 points | 40 mm | 5 | 15 mm | 0.23 | SW + sealant | Excellent | Good | Good | Example of the invention of the present application |
| 11 | Zn-Al-Mg | Si-based inorganic film-1 | 0.5 | 5 points | 5 points | 5 points | 45 mm | 5 | 9 mm | 0.14 | SW + sealant | Fair | Fair | Fair | Example of the invention of the present application |
| 12 | Zn-Al-Mg | Si-based inorganic film-1 | 0.5 | 5 points | 5 points | 5 points | 50 mm | 5 | 3 mm | 0.048 | SW + sealant | Poor | Poor | Poor | Example of the invention of the present application |
| 13 | Zn-Al-Mg | Si-based inorganic film-1 | 0.5 | 5 points | 5 points | 5 points | 5 mm | 5 | 57 mm | 0.9 | Only sealant | Excellent | Excellent | Excellent | Example of the invention of the present application |
| 14 | Zn-Al-Mg | Si-based inorganic film-1 | 0.1 | 4 points | 4 points | 5 points | 30 mm | 5 | 27 mm | 0.43 | SW + sealant | Excellent | Good | Good | Example of the invention of the present application |
| 15 | Zn-Al-Mg | Si-based inorganic film-1 | 0.3 | 5 points | 5 points | 5 points | 30 mm | 5 | 27 mm | 0.43 | SW + sealant | Excellent | Good | Good | Example of the invention of the present application |
| 16 | Zn-Al-Mg | Si-based inorganic film-1 | 1.2 | 5 points | 5 points | 5 points | 30 mm | 5 | 27 mm | 0.43 | SW + sealant | Excellent | Good | Good | Example of the invention of the present application |
| 17 | Zn-Al-Mg | Si-based inorganic film-1 | 1.5 | 5 points | 5 points | 5 points | 30 mm | 5 | 27 mm | 0.43 | SW + sealant | Excellent | Good | Good | Example of the invention of the present application |
| 18 | Zn-Al-Mg | Si-based inorganic film-2 | 0.5 | 5 points | 5 points | 5 points | 30 mm | 5 | 27 mm | 0.43 | SW + sealant | Excellent | Good | Good | Example of the invention of the present application |
| 19 | Zn-Al-Mg | Si-based inorganic film-3 | 0.5 | 5 points | 5 points | 5 points | 30 mm | 5 | 27 mm | 0.43 | SW + sealant | Excellent | Good | Good | Example of the invention of the present application |
| 20 | Zn-Al-Mg | Si-based inorganic film-4 | 0.5 | 5 points | 5 points | 5 points | 30 mm | 5 | 27 mm | 0.43 | SW + sealant | Excellent | Good | Good | Example of the invention of the present application |
| 21 | Zn-Al-Mg | Si-based inorganic film-5 | 0.5 | 5 points | 5 points | 5 points | 30 mm | 5 | 27mm | 0.43 | SW + sealant | Excellent | Good | Good | Example of the invention of the present application |
| 22 | Zn-Al-Mg | Si-based inorganic film-6 | 0.5 | 5 points | 5 points | 5 points | 30 mm | 5 | 27 mm | 0.43 | SW + sealant | Excellent | Good | Good | Example of the invention of the present application |
| 23 | Zn-Al-Mg | Si-based inorganic film-7 | 0.5 | 5 points | 5 points | 5 points | 30 mm | 5 | 27 mm | 0.43 | SW + sealant | Excellent | Good | Good | Example of the invention of the present application |
| 24 | Zn-Al-Mg | Si-based inorganic film-8 | 0.5 | 4 points | 4 points | 5 points | 30 mm | 5 | 27 mm | 0.43 | SW + sealant | Excellent | Good | Good | Example of the invention of the present application |

**[Table 5B]**

| No. | Steel sheet type | Film | | Coolant resistance | | Corrosion resistance | Interval between flow paths | Number of flow paths | Flow path width | Area ratio of cooling flow path to battery bottom surface | Joining method | Battery unit structure | | | Remarks |
|---|---|---|---|---|---|---|---|---|---|---|---|---|---|---|---|
| | | Type | Film thickness (µm) | Without formic acid | With formic acid | | | | | | | Case-cooling structure (FIG. 1) | Case-upper lid-cooling structure (FIG. 2) | Case-G.F.-upper lid-cooling structure (FIG. 3) | |
| 25 | Zn-Al-Mg | Zr-based inorganic film-1 | 0.5 | 4 points | 4 points | 5 points | 30 mm | 5 | 27 mm | 0.43 | SW + sealant | Excellent | Good | Good | Example of the invention of the present application |
| 26 | Zn-Al-Mg | Zr-based inorganic film-1 | 0.5 | 4 points | 4 points | 5 points | 30 mm | 5 | 27 mm | 0.43 | TOX^{®} + sealant | Excellent | Good | Good | Example of the invention of the present application |
| 27 | Zn-Al-Mg | Zr-based inorganic film-2 | 0.5 | 4 points | 4 points | 5 points | 30 mm | 5 | 27 mm | 0.43 | SW + sealant | Excellent | Good | Good | Example of the invention of the present application |
| 28 | Zn-Al-Mg | Zr-based inorganic film-3 | 0.5 | 4 points | 4 points | 5 points | 30 mm | 5 | 27 mm | 0.43 | SW + sealant | Excellent | Good | Good | Example of the invention of the present application |
| 29 | Zn-Al-Mg | Zr-based inorganic film-4 | 0.5 | 4 points | 4 points | 5 points | 30 mm | 5 | 27 mm | 0.43 | SW + sealant | Excellent | Good | Good | Example of the invention of the present application |
| 30 | Zn-Al-Mg | Zr-based inorganic film-5 | 0.5 | 4 points | 4 points | 5 points | 30 mm | 5 | 27 mm | 0.43 | SW + sealant | Excellent | Good | Good | Example of the invention of the present application |
| 31 | Zn-Al-Mg | Zr-based inorganic film-6 | 0.5 | 4 points | 4 points | 5 points | 30 mm | 5 | 27 mm | 0.43 | SW + sealant | Excellent | Good | Good | Example of the invention of the present application |
| 32 | Zn-Al-Mg | Zr-based inorganic film-7 | 0.5 | 4 points | 4 points | 5 points | 30 mm | 5 | 27 mm | 0.43 | SW + sealant | Excellent | Good | Good | Example of the invention of the present application |
| 33 | Zn-Al-Mg | Zr-based inorganic film-8 | 0.5 | 3 points | 3 points | 5 points | 30 mm | 5 | 27 mm | 0.43 | SW + sealant | Excellent | Good | Good | Example of the invention of the present application |
| 34 | Zn-Al-Mg | Resin film-1 | 0.5 | 5 points | 5 points | 5 points | 30 mm | 5 | 27 mm | 0.43 | SW + sealant | Excellent | Good | Good | Example of the invention of the present application |
| 35 | Zn-Al-Mg | Resin film-1 | 0.5 | 5 points | 5 points | 5 points | 30 mm | 5 | 27 mm | 0.43 | TOX^{®} + sealant | Excellent | Good | Good | Example of the invention of the present application |
| 36 | Zn-Al-Mg | Resin film-7 | 0.5 | 5 points | 5 points | 5 points | 30 mm | 5 | 27 mm | 0.43 | SW + sealant | Excellent | Good | Good | Example of the invention of the present application |
| 37 | Zn-Al-Mg | Resin film-7 | 0.5 | 5 points | 5 points | 5 points | 30 mm | 5 | 27 mm | 0.43 | TOX^{®} + sealant | Excellent | Good | Good | Example of the invention of the present application |
| 38 | Zn-Al-Mg-Si | Si-based inorganic film-1 | 0.5 | 4 points | 4 points | 5 points | 30 mm | 5 | 27 mm | 0.43 | SW + sealant | Excellent | Good | Good | Example of the invention of the present application |
| 39 | Zn-Al-Mg-Si | Resin film-1 | 0.5 | 5 points | 5 points | 5 points | 30 mm | 5 | 27 mm | 0.43 | SW + sealant | Excellent | Good | Good | Example of the invention of the present application |
| 40 | Zn-Al-Mg-Si | Resin film-1 | 0.5 | 5 points | 5 points | 5 points | 30 mm | 5 | 27 mm | 0.43 | TOX^{®} + sealant | Excellent | Good | Good | Example of the invention of the present application |
| 41 | Zn-Al-Mg-Si | Resin film-7 | 0.5 | 5 points | 5 points | 5 points | 30 mm | 5 | 27 mm | 0.43 | SW + sealant | Excellent | Good | Good | Example of the invention of the present application |
| 42 | Zn-Al-Mg-Si | Resin film-7 | 0.5 | 5 points | 5 points | 5 points | 30 mm | 5 | 27 mm | 0.43 | TOX^{®} + sealant | Excellent | Good | Good | Example of the invention of the present application |
| 43 | GI | Si-based inorganic film-1 | 0.5 | 2 points | 2 points | 5 points | 30 mm | 5 | 27 mm | 0.43 | SW + sealant | Excellent | Good | Good | Example of the invention of the present application |
| 44 | GI | Si-based inorganic film-1 | 0.5 | 5 points | 5 points | 5 points | 30 mm | 5 | 27 mm | 0.43 | SW + sealant | Excellent | Good | Good | Example of the invention of the present application |
| 45 | GI | Si-based inorganic film-1 | 0.5 | 5 points | 5 points | 5 points | 30 mm | 5 | 27 mm | 0.43 | TOX^{®} + sealant | Excellent | Good | Good | Example of the invention of the present application |
| 46 | GI | Si-based inorganic film-1 | 0.5 | 5 points | 5 points | 5 points | 30 mm | 5 | 27 mm | 0.43 | SW + sealant | Excellent | Good | Good | Example of the invention of the present application |
| 47 | GI | Si-based inorganic film-1 | 0.5 | 5 points | 5 points | 5 points | 30 mm | 5 | 27 mm | 0.43 | TOX(R) + sealant | Excellent | Good | Good | Example of the invention of the present application |

**[Table 5C]**

| No. | Steel sheet type | Film | | Coolant resistance | | Corrosion resistance | Interval between flow paths | Number of flow paths | Flow path width | Area ratio of cooling flow path to battery bottom surface | Joining method | Battery unit structure | | | Remarks |
|---|---|---|---|---|---|---|---|---|---|---|---|---|---|---|---|
| | | Type | Film thickness (µm) | Without formic acid | With formic acid | | | | | | | Case-cooling structure (FIG. 1) | Case-upper lid-cooling structure (FIG. 2) | Case-G.F.-upper lid-cooling structure (FIG. 3) | |
| 48 | GA | Si-based inorganic film-1 | 0.5 | 2 points | 2 points | 5 points | 30 mm | 5 | 27 mm | 0.43 | SW + sealant | Excellent | Good | Good | Example of the invention of the present application |
| 49 | GA | Resin film-1 | 5.5 | 5 points | 5 points | 5 points | 10 mm | 5 | 51 mm | 0.81 | TOX^{®} + sealant | Excellent | Excellent | Excellent | Example of the invention of the present application |
| 50 | GA | Resin film-1 | 5.5 | 5 points | 5 points | 5 points | 10 mm | 5 | 51 mm | 0.81 | SW + sealant | Excellent | Excellent | Excellent | Example of the invention of the present application |
| 51 | GA | Resin film-1 | 5.5 | 5 points | 5 points | 5 points | 15 mm | 5 | 45 mm | 0.71 | SW + sealant | Excellent | Excellent | Excellent | Example of the invention of the present application |
| 52 | GA | Resin film-1 | 5.5 | 5 points | 5 points | 5 points | 15 mm | 5 | 45 mm | 0.71 | TOX^{®} + sealant | Excellent | Excellent | Excellent | Example of the invention of the present application |
| 53 | GA | Resin film-1 | 5.5 | 5 points | 5 points | 5 points | 18 mm | 9 | 15 mm | 0.43 | SW + sealant | Excellent | Excellent | Good | Example of the invention of the present application |
| 54 | GA | Resin film-1 | 5.5 | 5 points | 5 points | 5 points | 30 mm | 4 | 41.25 mm | 0.52 | SW + sealant | Excellent | Excellent | Good | Example of the invention of the present application |
| 55 | GA | Resin film-1 | 5.5 | 5 points | 5 points | 5 points | 30 mm | 4 | 41.25 mm | 0.52 | TOX^{®} + sealant | Excellent | Excellent | Good | Example of the invention of the present application |
| 56 | GA | Resin film-1 | 5.5 | 5 points | 5 points | 5 points | 30 mm | 5 | 27 mm | 0.43 | SW + sealant | Excellent | Good | Good | Example of the invention of the present application |
| 57 | GA | Resin film-1 | 5.5 | 5 points | 5 points | 5 points | 30 mm | 6 | 17.5 mm | 0.23 | SW + sealant | Excellent | Good | Good | Example of the invention of the present application |
| 58 | GA | Resin film-1 | 5.5 | 5 points | 5 points | 5 points | 40 mm | 5 | 15 mm | 0.23 | SW + sealant | Excellent | Good | Good | Example of the invention of the present application |
| 59 | GA | Resin film-1 | 5.5 | 5 points | 5 points | 5 points | 45 mm | 5 | 9 mm | 0.14 | SW + sealant | Fair | Fair | Fair | Example of the invention of the present application |
| 60 | GA | Resin film-1 | 5.5 | 5 points | 5 points | 5 points | 50 mm | 5 | 3 mm | 0.048 | SW + sealant | Poor | Poor | Poor | Example of the invention of the present application |
| 61 | GA | Resin film-1 | 5.5 | 5 points | 5 points | 5 points | 5 mm | 5 | 57 mm | 0.9 | Only sealant | Excellent | Excellent | Excellent | Example of the invention of the present application |
| 62 | GA | Resin film-1 | 2 | 5 points | 3 points | 3 points | 30 mm | 5 | 27 mm | 0.43 | SW + sealant | Excellent | Good | Good | Example of the invention of the present application |
| 63 | GA | Resin film-1 | 3 | 5 points | 5 points | 5 points | 30 mm | 5 | 27 mm | 0.43 | SW + sealant | Excellent | Good | Good | Example of the invention of the present application |
| 64 | GA | Resin film-1 | 8 | 5 points | 5 points | 5 points | 30 mm | 5 | 27 mm | 0.43 | SW + sealant | Excellent | Good | Good | Example of the invention of the present application |
| 65 | GA | Resin film-1 | 15 | 5 points | 5 points | 5 points | 30 mm | 5 | 27 mm | 0.43 | SW + sealant | Excellent | Good | Good | Example of the invention of the present application |
| 66 | GA | Resin film-1 | 18 | 5 points | 5 points | 5 points | 30 mm | 5 | 27 mm | 0.43 | SW + sealant | Excellent | Good | Good | Example of the invention of the present application |
| 67 | GA | Resin film-2 | 5.5 | 5 points | 5 points | 5 points | 30 mm | 5 | 27 mm | 0.43 | SW + sealant | Excellent | Good | Good | Example of the invention of the present application |
| 68 | GA | Resin film-3 | 5.5 | 5 points | 5 points | 5 points | 30 mm | 5 | 27 mm | 0.43 | SW + sealant | Excellent | Good | Good | Example of the invention of the present application |
| 69 | GA | Resin film-4 | 5.5 | 5 points | 5 points | 5 points | 30 mm | 5 | 27 mm | 0.43 | SW + sealant | Excellent | Good | Good | Example of the invention of the present application |
| 70 | GA | Resin film-5 | 5.5 | 5 points | 5 points | 5 points | 30 mm | 5 | 27 mm | 0.43 | SW + sealant | Excellent | Good | Good | Example of the invention of the present application |
| 71 | GA | Resin film-6 | 5.5 | 5 points | 5 points | 5 points | 30 mm | 5 | 27 mm | 0.43 | SW + sealant | Excellent | Good | Good | Example of the invention of the present application |

**[Table 5D]**

| No. | Steel sheet type | Film | | Coolant resistance | | Corrosion resistance | Interval between flow paths | Number of flow paths | Flow path width | Area ratio of cooling flow path to battery bottom surface | Joining method | Battery unit structure | | | Remarks |
|---|---|---|---|---|---|---|---|---|---|---|---|---|---|---|---|
| | | Type | Film thickness (µm) | Without formic acid | With formic acid | | | | | | | Case-cooling structure (FIG. 1) | Case-upper lid-cooling structure (FIG. 2) | Case-G.F.-upper lid-cooling structure (FIG. 3) | |
| 72 | GA | Resin film-7 | 5.5 | 5 points | 5 points | 5 points | 10 mm | 5 | 51 mm | 0.81 | TOX^{®} + sealant | Excellent | Excellent | Excellent | Example of the invention of the present application |
| 73 | GA | Resin film-7 | 5.5 | 5 points | 5 points | 5 points | 10 mm | 5 | 51 mm | 0.81 | SW + sealant | Excellent | Excellent | Excellent | Example of the invention of the present application |
| 74 | GA | Resin film-7 | 5.5 | 5 points | 5 points | 5 points | 15 mm | 5 | 45 mm | 0.71 | SW + sealant | Excellent | Excellent | Excellent | Example of the invention of the present application |
| 75 | GA | Resin film-7 | 5.5 | 5 points | 5 points | 5 points | 15 mm | 5 | 45 mm | 0.71 | TOX^{®} + sealant | Excellent | Excellent | Excellent | Example of the invention of the present application |
| 76 | GA | Resin film-7 | 5.5 | 5 points | 5 points | 5 points | 18 mm | 9 | 15 mm | 0.43 | SW + sealant | Excellent | Excellent | Good | Example of the invention of the present application |
| 77 | GA | Resin film-7 | 5.5 | 5 points | 5 points | 5 points | 30 mm | 4 | 41.25 mm | 0.52 | SW + sealant | Excellent | Excellent | Good | Example of the invention of the present application |
| 78 | GA | Resin film-7 | 5.5 | 5 points | 5 points | 5 points | 30 mm | 4 | 41.25 mm | 0.52 | TOX^{®} + sealant | Excellent | Excellent | Good | Example of the invention of the present application |
| 79 | GA | Resin film-7 | 5.5 | 5 points | 5 points | 5 points | 30 mm | 5 | 27 mm | 0.43 | SW + sealant | Excellent | Good | Good | Example of the invention of the present application |
| 80 | GA | Resin film-7 | 5.5 | 5 points | 5 points | 5 points | 30mm | 6 | 17.5 mm | 0.23 | SW + sealant | Excellent | Good | Good | Example of the invention of the present application |
| 81 | GA | Resin film-7 | 5.5 | 5 points | 5 points | 5 points | 40 mm | 5 | 15 mm | 0.23 | SW + sealant | Excellent | Good | Good | Example of the invention of the present application |
| 82 | GA | Resin film-7 | 5.5 | 5 points | 5 points | 5 points | 45 mm | 5 | 9mm | 0.14 | SW + sealant | Fair | Fair | Fair | Example of the invention of the present application |
| 83 | GA | Resin film-7 | 5.5 | 5 points | 5 points | 5 points | 50 mm | 5 | 3mm | 0.048 | SW + sealant | Poor | Poor | Poor | Example of the invention of the present application |
| 84 | GA | Resin film-7 | 5.5 | 5 points | 5 points | 5 points | 5 mm | 5 | 57 mm | 0.9 | Only sealant | Excellent | Excellent | Excellent | Example of the invention of the present application |
| 85 | GA | Resin film-8 | 5.5 | 5 points | 5 points | 5 points | 30 mm | 5 | 27 mm | 0.43 | SW + sealant | Excellent | Good | Good | Example of the invention of the present application |

**[Table 5E]**

| No. | Steel sheet type | Film | | Coolant resistance | | Corrosion resistance | Interval between flow paths | Number of flow paths | Flow path width | Area ratio of cooling flow path to battery bottom surface | Joining method | Battery unit structure | | | Remarks |
|---|---|---|---|---|---|---|---|---|---|---|---|---|---|---|---|
| | | Type | Film thickness (µm) | Without formic acid | With formic acid | | | | | | | Case-cooling structure (FIG. 1) | Case-upper lid-cooling structure (FIG. 2) | Case-G.F.-upper lid-cooling structure (FIG. 3) | |
| 86 | GA | Resin film-9 | 5.5 | 5 points | 5 points | 5 points | 30 mm | 5 | 27 mm | 0.43 | SW + sealant | Excellent | Good | Good | Example of the invention of the present application |
| 87 | GA | Resin film-10 | 5.5 | 5 points | 5 points | 5 points | 30 mm | 5 | 27 mm | 0.43 | SW + sealant | Excellent | Good | Good | Example of the invention of the present application |
| 88 | GA | Resin film-11 | 5.5 | 5 points | 5 points | 5 points | 30 mm | 5 | 27 mm | 0.43 | SW + sealant | Excellent | Good | Good | Example of the invention of the present application |
| 89 | GA | Resin film-12 | 5.5 | 5 points | 5 points | 5 points | 30 mm | 5 | 27 mm | 0.43 | SW + sealant | Excellent | Good | Good | Example of the invention of the present application |
| 90 | GA | Resin film-13 | 5.5 | 5 points | 5 points | 5 points | 30mm | 5 | 27 mm | 0.43 | SW + sealant | Excellent | Good | Good | Example of the invention of the present application |
| 91 | GA | Resin film-14 | 5.5 | 5 points | 5 points | 5 points | 30mm | 5 | 27 mm | 0.43 | SW + sealant | Excellent | Good | Good | Example of the invention of the present application |
| 92 | GA | Resin film-15 | 5.5 | 5 points | 5 points | 5 points | 30 mm | 5 | 27 mm | 0.43 | SW + sealant | Excellent | Good | Good | Example of the invention of the present application |
| 93 | GA | Resin film-16 | 5.5 | 5 points | 5 points | 5 points | 30 mm | 5 | 27 mm | 0.43 | SW + sealant | Excellent | Good | Good | Example of the invention of the present application |
| 94 | GA | Resin film-17 | 5.5 | 5 points | 5 points | 5 points | 30 mm | 5 | 27 mm | 0.43 | SW + sealant | Excellent | Good | Good | Example of the invention of the present application |
| 95 | GA | Resin film-18 | 18 | 5 points | 5 points | 3 points | 30 mm | 5 | 27 mm | 0.43 | TOX^{®} + sealant | Excellent | Good | Good | Example of the invention of the present application |
| 96 | GA | Resin film-19 | 18 | 5 points | 5 points | 3 points | 30 mm | 5 | 27 mm | 0.43 | TOX^{®} + sealant | Excellent | Good | Good | Example of the invention of the present application |
| 97 | GA | Resin film-20 | 18 | 5 points | 5 points | 3 points | 30 mm | 5 | 27 mm | 0.43 | TOX^{®} + sealant | Excellent | Good | Good | Example of the invention of the present application |
| 98 | GA | Resin film-21 | 18 | 5 points | 5 points | 3 points | 30 mm | 5 | 27 mm | 0.43 | TOX^{®} + sealant | Excellent | Good | Good | Example of the invention of the present application |
| 99 | Zn-AI-Mg | None | 0 | 1 point | 1 point | 5 points | 30mm | 5 | 27 mm | 0.43 | SW + sealant | Excellent | Good | Good | Comparative Example |
| 100 | Zn-AI-Mg-Si | None | 0 | 1 point | 1 point | 5 points | 30 mm | 5 | 27 mm | 0.43 | SW + sealant | Excellent | Good | Good | Comparative Example |
| 101 | GI | None | 0 | 1 point | 1 point | 5 points | 30 mm | 5 | 27 mm | 0.43 | SW + sealant | Excellent | Good | Good | Comparative Example |
| 102 | GA | None | 0 | 1 point | 1 point | 5 points | 30 mm | 5 | 27 mm | 0.43 | SW + sealant | Excellent | Good | Good | Comparative Example |
| 103 | CR | None | 0 | 1 point | 1 point | 1 point | 30 mm | 5 | 27 mm | 0.43 | SW + sealant | Excellent | Good | Good | Comparative Example |

As shown in Tables 5A to 5E, in the examples of the invention of the present application satisfying the requirements of the present embodiment, excellent results were obtained in terms of not only corrosion resistance to a coolant (coolant corrosion resistance) but also corrosion resistance to an external environment (external corrosion resistance). In addition, evaluation results with high cooling efficiency were obtained in most of the examples of the invention of the present application. Particularly excellent results were obtained in cases where the plating layer was Zn-Al-Mg, the interval between the water-cooling medium flow path was 40 mm or less, the inorganic film contained a rust preventive component, the resin film had a thickness of 1.0 to 15 µm, the resin film contained a conductive pigment, and the conductive pigment had a powder resistivity of 185 × 10⁻⁶ Ωcm or less. Therefore, it was found that the battery unit 1 according to the present embodiment is excellent not only in corrosion resistance to a coolant (coolant corrosion resistance) but also in corrosion resistance to an external environment (external corrosion resistance).

On the other hand, in Comparative Examples not satisfying the requirements of the present embodiment, that is, in Comparative Examples not provided with a chemical conversion coating film and not provided with plating, poor results were obtained in either (or both) of the coolant corrosion resistance and the external corrosion resistance.

Although the preferred embodiments of the present invention have been described in detail with reference to the accompanying drawings, the present invention is not limited to such examples. It is obvious that a person having ordinary knowledge in the technical field to which the present invention belongs can conceive various changes or modifications within the scope of the technical idea described in the claims, and it is naturally understood that these also belong to the technical scope of the present invention.

### [Brief Description of the Reference Symbols]

1 Battery unit
10 Battery pack
10a Bottom surface portion
10b Side surface portion
10c Upper surface portion
20 Cooling structure
21 Flow path-forming portion
22 Joint portion
25 Water-cooling medium flow path
30 Spot welded portion

## Claims

1. A battery unit comprising: a battery pack that houses a battery cell; and a water-cooling medium flow path formed outside a bottom surface of the battery pack,
wherein the water-cooling medium flow path is made of a Zn-based plated steel sheet,
an inorganic film or a resin film is formed as a chemical conversion coating film on a surface of the Zn-based plated steel sheet, and
the inorganic film contains a Si-based component or a Zr-based component as a main component.

2. The battery unit according to claim 1, wherein an interval between the water-cooling medium flow paths is 40 mm or less.

3. The battery unit according to claim 1 or 2, wherein the bottom surface of the battery pack is made of a member obtained by processing the Zn-based plated steel sheet, and the water-cooling medium flow path is in direct contact with the bottom surface of the battery pack.

4. The battery unit according to claim 1 or 2, wherein the water-cooling medium flow path is joined to a flow path upper lid made of the Zn-based plated steel sheet, and the water-cooling medium flow path is joined to the bottom surface of the battery pack via the flow path upper lid.

5. The battery unit according to any one of claims 1 to 4, wherein an interval between the water-cooling medium flow paths is 10 mm or more and 40 mm or less.

6. The battery unit according to any one of claims 1 to 5, wherein an interval between the water-cooling medium flow paths is 10 mm or more and 40 mm or less, and
a joint between the bottom surface of the battery pack and the water-cooling medium flow path has a composite joint structure of a sealant and spot welding or a sealant and mechanical joining.

7. The battery unit according to any one of claims 1 to 6, wherein the inorganic film contains at least one or more of a V component, a P component, and a Co component as a rust preventive component.

8. The battery unit according to claim 7, wherein the rust preventive component is any one or more of vanadium oxide, phosphoric acid, and Co nitrate.

9. The battery unit according to any one of claims 1 to 8, wherein the inorganic film or the resin film has conductivity.

10. The battery unit according to any one of claims 1 to 9, wherein the inorganic film is composed of a compound phase containing one or more of a Si-O bond, a Si-C bond, and a Si-OH bond.

11. The battery unit according to any one of claims 1 to 10, wherein a thickness of the inorganic film is more than 0 µm and 1.5 µm or less.

12. The battery unit according to any one of claims 1 to 6, wherein the resin film contains a resin, a rust preventive pigment, and a conductive pigment.

13. The battery unit according to claim 12, wherein the resin film contains any one or more of metal particles, intermetallic compound particles, conductive oxide particles, and conductive non-oxide ceramic particles as the conductive pigment, and
the conductive pigment has a powder resistivity of 185 × 10⁻⁶ Hem or less at 25°C, and contains any one or more selected from the group consisting of Zn, Si, Zr, V, Cr, Mo, Mn, Fe, and W as a constituent element.

14. The battery unit according to claim 12 or 13, wherein the resin film contains the conductive pigment in a proportion of 1.0 mass% or more and 30 mass% or less.

15. The battery unit according to any one of claims 12 to 14, wherein an average thickness of the resin film is 1.0 µm or more and 15 µm or less.

16. The battery unit according to any one of claims 1 to 11, wherein the Zn-based plated steel sheet is a Zn-Al-Mg plated steel sheet, and
an inorganic film containing a Si-based component as a main component is formed on a surface of the Zn-Al-Mg plated steel sheet.

17. The battery unit according to any one of claims 1 to 6 and 12 to 15, wherein the Zn-based plated steel sheet is a Zn-Al plated steel sheet, and
a resin film is formed on a surface of the Zn-Al plated steel sheet.
